# EUROPEAN PATENT SPECIFICATION

(11) **EP 3 598 476 B1**
(45) Date of publication and mention of the grant of the patent: **21.06.2023**
(21) Application number: 19186493.3
(22) Date of filing: 16.07.2019
(51) Int. Cl.: H01J 49/00, H01J 49/02

(54) **METHODS AND SYSTEMS FOR DETECTION OF ION SPATIAL DISTRIBUTION**
VERFAHREN UND SYSTEME ZUR ERKENNUNG DER RÄUMLICHEN IONENVERTEILUNG
PROCÉDÉS ET SYSTÈMES DE DÉTECTION DE LA DISTRIBUTION SPATIALE D'IONS

(30) Priority: 18.07.2018 US 201816038546
(43) Date of publication of application: 22.01.2020
(73) Proprietor: Thermo Finnigan LLC, San Jose, CA 95134 (US)
(72) Inventor: CHEN, Tsung-Chi, Shelton, CT 06484-4794 (US)
(74) Representative: Boult Wade Tennant LLP

(56) References cited:
- US-A1- 2011 095 177
- US-A1- 2011 095 178
- YANAGIDA TAKAYUKI ET AL: "Comparative study of ceramic and single crystal Ce:GAGG scintillator", OPTICAL MATERIALS, vol. 35, no. 12, 20 July 2013 (2013-07-20) , pages 2480-2485, XP028730873, ISSN: 0925-3467, DOI: 10.1016/J.OPTMAT.2013.07.002
- C. PARK ET AL: "Performance comparison between ceramic Ce:GAGG and single crystal Ce:GAGG with digital-SiPM", JOURNAL OF INSTRUMENTATION, vol. 12, no. 01, 2 January 2017 (2017-01-02), pages P01002-P01002, XP55642826, DOI: 10.1088/1748-0221/12/01/P01002
- TOUS J ET AL: "Single crystal scintillator plates used for light weight material X-ray radiography", JOURNAL OF PHYSICS: CONFERENCE SERIES, INSTITUTE OF PHYSICS PUBLISHING, BRISTOL, GB, vol. 425, no. 19, 22 March 2013 (2013-03-22), page 192017, XP020243130, ISSN: 1742-6596, DOI: 10.1088/1742-6596/425/19/192017
- GYS T ED - UNNO YOSHINOBU ET AL: "Micro-channel plates and vacuum detectors", NUCLEAR INSTRUMENTS & METHODS IN PHYSICS RESEARCH. SECTION A, vol. 787, 18 December 2014 (2014-12-18), pages 254-260, XP029157812, ISSN: 0168-9002, DOI: 10.1016/J.NIMA.2014.12.044
- Martin Nikl ET AL: "50. Single-Crystal Scintillation Materials", Springer Handbook of Crystal Growth, 1 January 2010 (2010-01-01), pages 1663-1700, XP55643155, ISBN: 978-3-540-74761-1 Retrieved from the Internet: URL:https://books.google.nl/books/about/Sp ringer_Handbook_of_Crystal_Growth.html?id= izaSIlOahJkC&printsec=frontcover&source=kp _read_button&redir_esc=y#v=onepage&q&f=fal se [retrieved on 2019-11-15]

## Description

### FIELD OF THE INVENTION

The present invention relates to the field of mass spectrometry. More particularly, the present invention relates to mass spectrometer detector systems and methods in which ions exiting a quadrupole mass analyzer are converted to a quantity of electrons and said electrons are converted to a quantity of photons that are focused onto an image plane and imaged by a photo-imager.

### BACKGROUND OF THE INVENTION

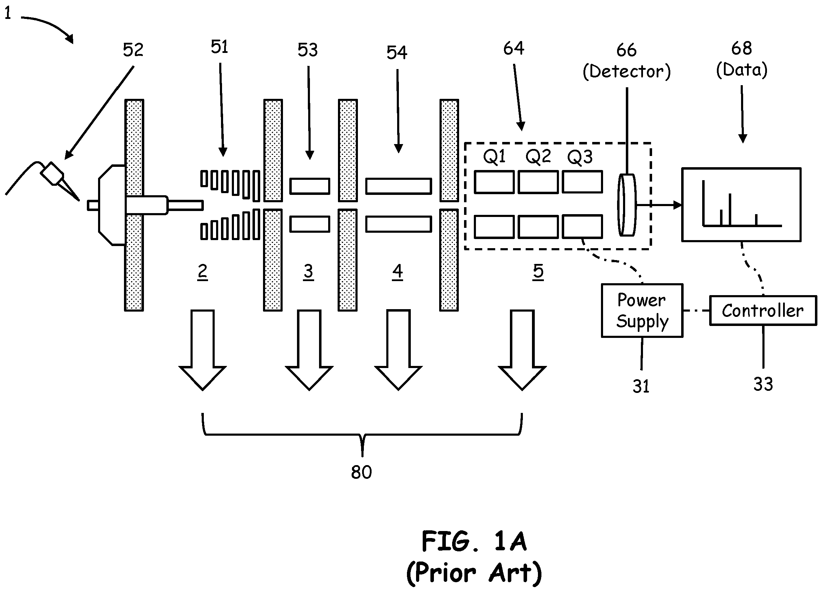

Quadrupole mass filters are often employed as a component of a triple stage mass spectrometry system. By way of non-limiting example, FIG. 1A schematically illustrates a triple-quadrupole system, as generally designated by the reference numeral **1.** The operation of mass spectrometer **1** can be controlled and data **68** can be acquired by a control and data system (not depicted) of various circuitry of one or more known types, which may be implemented as any one or a combination of general or special-purpose processors (e.g. a field-programmable gate array (FPGA), firmware, software to provide instrument control and data analysis for mass spectrometers and/or related instruments. A sample containing one or more analytes of interest can be ionized via an ion source **52** operating at or near atmospheric or sub-ambient pressure. The resultant ions are directed via predetermined ion optics that often can include tube lenses, skimmers, ion funnels **51,** and multipoles (e.g., reference characters **53** and **54)** so as to be urged through a series of chambers, e.g., chambers **2, 3** and **4,** of progressively reduced pressure that operationally guide and focus such ions to provide good transmission efficiencies. The various chambers communicate with corresponding ports **80** (represented as arrows in FIG. 1A) that are coupled to a set of vacuum pumps (differential pumping, not shown) to maintain the pressures at the desired values.

The example mass spectrometer system **1** of FIG. 1A is shown illustrated to include a triple stage configuration **64** within a high vacuum chamber **5,** the triple stage configuration having sections labeled **Q1**, **Q2** and **Q3** electrically coupled to respective power supplies (not shown). The **Q1**, **Q2** and **Q3** stages may be operated, respectively, as a first quadrupole mass filter, a fragmentation cell, and a second quadrupole mass filter. Ions are analyzed or filtered at the first stage, fragmented at the second stage, and/or analyzed or filtered within the last stage, and are then passed to a detector **66.** Such a detector is beneficially placed at the channel exit of the quadrupole (e.g., **Q3** of FIG. 1A) to provide ion abundance information that can be processed into a rich mass spectrum (data) **68** showing the variation of ion abundance with respect to *m*/*z* ratio. With the recent development of imaging ion detectors for detecting ions emerging from a quadrupole mass filter (see detailed discussion below), three-dimensional information (e.g., two spatial dimensions and one temporal dimension) may be obtained which maintains high mass resolving power without significant degradation of signal intensity.

During conventional operation of a multipole mass filter, such as the quadrupole mass filter **Q3** shown in FIG 1A, to generate a mass spectrum, a detector (e.g., the detector **66** of FIG. 1A) is used to measure the quantity of ions that pass completely through the mass filter as a function of time during the application of superimposed oscillatory radio frequency (RF) and non-oscillatory (DC) electric fields. Thus, at any point in time, the detector only receives those ions having *m*/*z* ratios within the mass filter pass band at that time - that is, only those ions having stable trajectories within the multipole under the particular RF and DC voltages that are applied to the quadrupole at that time. Such conventional operation creates a trade-off between instrument resolution and sensitivity. High mass resolving can be achieved, but only if the DC/RF ratio is such that the filter pass band is very narrow, such that most ions develop unstable trajectories within the mass filter and few pass through to the detector. Under such conditions, scans must be performed relatively slowly so as to detect an adequate number of ions at each *m*/*z* data point. Conversely, high sensitivity or high speed can also be achieved during conventional operation, but only by widening the pass band, thus causing degradation of *m*/*z* resolution.

U.S. Patent No. 8,389,929, teaches a quadrupole mass filter method and system that discriminates among ion species, even when both are simultaneously stable, by recording where the ions strike a position-sensitive detector as a function of the applied RF and DC fields. When the arrival times and positions are recorded, the resulting data can be thought of as a series of ion images. Each observed ion image is essentially the superposition of component images, one for each distinct *m*/*z* value exiting the quadrupole at a given time instant. The same patent also teaches methods for the prediction of an arbitrary ion image as a function of *m*/*z* and the applied field. Thus, each individual component image can be extracted from a sequence of observed ion images by mathematical deconvolution or decomposition processes, as further discussed in the aforementioned patent. The mass-to-charge ratio and abundance of each species necessarily follow directly from the deconvolution or decomposition. Accordingly, high mass resolving power can be achieved under a wide variety of operating conditions, a property not usually associated with quadrupole mass spectrometers.

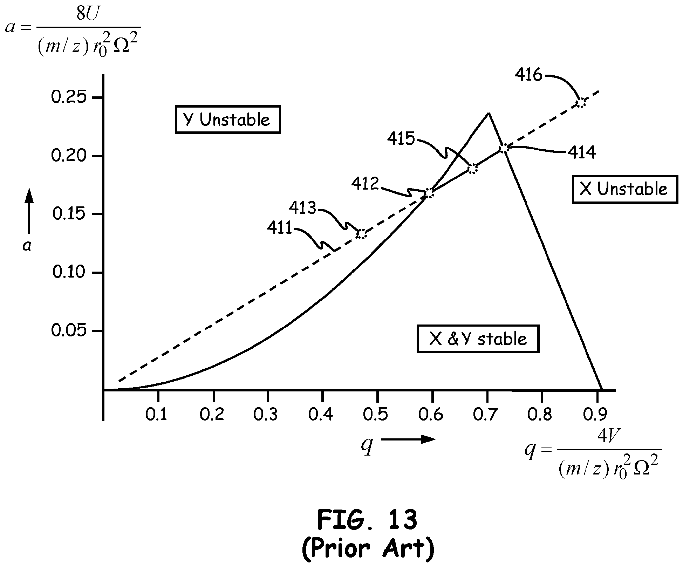

The inventors of U. S. Patent No. 8,389,929 recognized that ions of different *m*/*z* ratios exiting a quadrupole mass filter may be discriminated, even when both ions are simultaneously stable (that is, have stable trajectories) within the mass filter by recording where the ions strike a position-sensitive detector as a function of the applied RF and DC fields. The inventors of U.S. Patent No. 8,389,929 recognized that such operation is advantageous because when a quadrupole is operated in, for example, a mass filter mode, the scanning of the device that is provided by ramped RF and DC voltages naturally varies the spatial characteristics with time as observed at the exit aperture of the quadrupole. Specifically, ions manipulated by a quadrupole are induced to perform a complex 2-dimensional oscillatory motion on the detector cross section as the scan passes through the stability region of the ions. All ion species of respective *m*/*z* ratios express exactly the same motion, across the same range of Mathieu parameter "*a*" and "*q*" values (see FIG. 13), but at different respective RF and DC voltages and at different respective times. The ion motion (i.e., for a cloud of ions of the same *m*/*z* but with various initial displacements and velocities) may be characterized by the variation of *a* and *q,* this variation influencing the position and shape cloud of ions exiting the quadrupole as a function of time. For two masses that are almost identical, the sequence of their respective oscillatory motions is essentially the same and can be approximately related by a time shift.

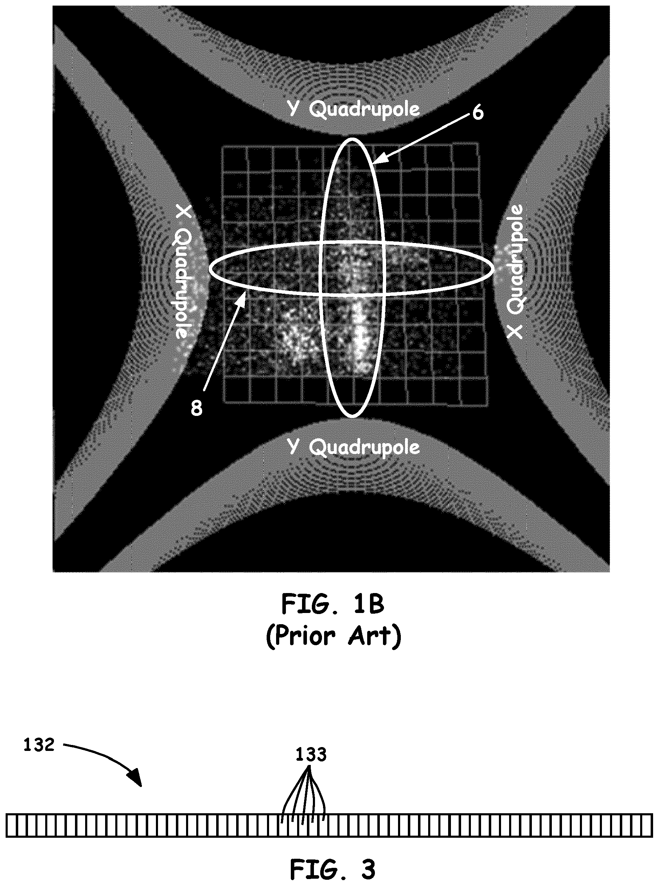

The teachings of the aforementioned U. S. Patent No. 8,3 89,929 exploit the varying spatial characteristics by collecting the spatially dispersed ions of different *m*/*z* even as they exit the quadrupole at essentially the same time. FIG. 1B shows a simulated recorded image of a particular pattern at a particular instant in time. The example image can be collected by a fast detector, (i.e., a detector capable of fast sampling within 1 0 or more RF cycles, more often down to an RF cycle or with sub RF cycles specificity, where said sub-RF specificity is possibly averaged for multiple RF cycles), positioned to acquire where and when ions exit to distinguish fine detail. The motion of ions may be referenced to a conventional Mathieu diagram (FIG. 13). During a mass scan, the (*q, a*) position of any ion is described by motion along scan line **411.** During a scan, the (*q, a*) position of an ion first approaches (point **413),** then enters (point **412),** then traverses across (point **415)** and finally exits (point **414)** the "X & Y stable" portion of the Mathieu diagram. During this time, the *y*-component of the ion's trajectory changes from "unstable" to "marginally stable" at the instability boundary (point **412)** and then becomes increasingly "stable" thereafter (points **415, 414** and **416).** Simultaneously, the x-component of the ion's trajectory qualitatively changes in the reverse sense. Watching an ion image formed in the exit cross section progress in time, the ion cloud is elongated and undergoes wild oscillations along the *y*-axis (herein termed "vertical" oscillations) that carry it beyond the top and bottom of a collected image. Gradually, the exit cloud contracts, and the amplitude of the *y*-component oscillations decreases when the (*q, a*) scan line is in the stable region of the ions of interest. If the cloud is sufficiently compact upon entering the quadrupole, the entire cloud remains in the image, i.e. 100% transmission efficiency, during the complete oscillation cycle when the ion is well within the stability region.

FIG. 1B graphically illustrates such a result. In particular, the vertical cloud of ions, as enclosed graphically by the ellipse 6 shown in FIG. 1B, correspond to the heavier ions entering the stability field of the quadrupole and accordingly oscillate with an amplitude that brings such heavy ions close to the denoted *y*-quadrupoles. The cluster of ions enclosed graphically by the ellipse **8** shown in FIG. 1B correspond to lighter ions exiting the stability field of the quadrupole and thus cause such ions to oscillate with an amplitude that brings such lighter ions close to the denoted x-quadrupoles. Within the image lie the additional clusters of ions (shown in FIG. 1B but not specifically highlighted) that have been collected at the same time frame but which have a different exit pattern because of the differences of their Mathieu *a* and q parameters.

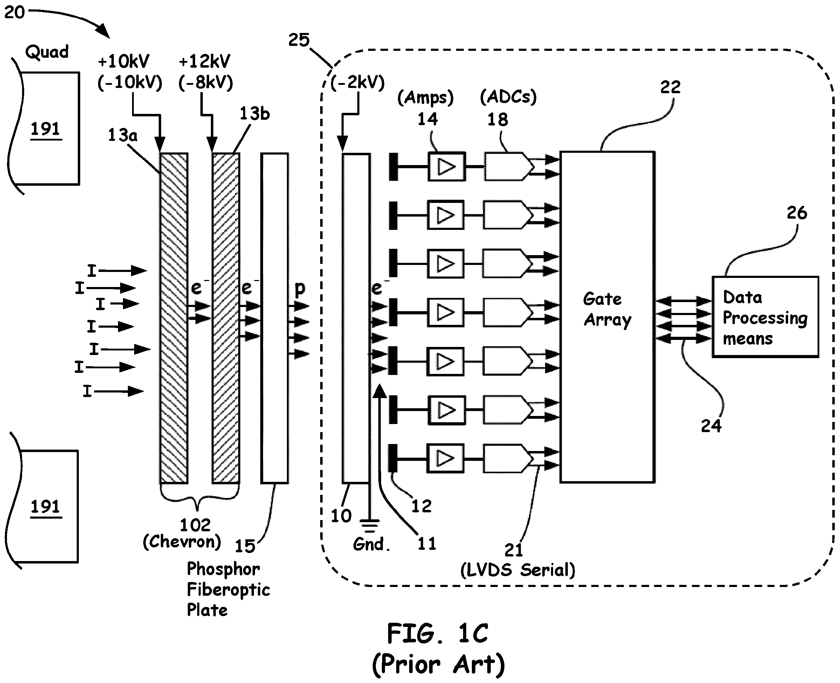

FIG. 1C illustrates one example of an imaging ion detector system, generally designated by the reference numeral **20** as described in the aforementioned U.S. Pat. No. 8,389,929. As shown in FIG. 1C, incoming ions **I** (shown directionally by way of accompanying arrows) having for example a beam cross section of about 1 mm or less, varying to the quadrupole's inscribed radius as they exit from an ion occupation volume between quadrupole rod electrodes **191**are received by an assembly **102** of microchannel plates (MCPs) **13a, 13b.** Such an assembly can include a pair of MCPs (a Chevron or V-stack) or triple (Z-stack) comprising MCPs adjacent to one another with each individual plate having sufficient gain and resolution to enable operating at appropriate bandwidth requirements (e.g., at about 1 MHz up to about 100 MHz) with the combination of plates generating up to about 10⁷ electrons in response to each incident ion.

To illustrate operability by way of an example, the first surface of the MCP assembly **102** can be floated to 10 kV, (i.e., +10 kV when configured for negative ions and -10 kV when configured to receive positive ions), with the second surface floated to +12 kV and -8 kV respectively, as shown in FIG. 1C. Such a plate biasing provides for a 2 kV voltage gradient to provide the gain with a resultant output relative 8 to 12 kV relative to ground. All high voltages portions are under vacuum between about 10⁻⁵ mBar (10⁻³ Pa) and 10⁻⁶ mBar (10⁻⁴ Pa).

The example biasing arrangement of FIG. 1C thus enables impinging ions **I** as received from, for example, the exit of a quadrupole, as discussed above, to induce electrons in the front surface of the first MCP **13a** for the case of positive ions, that are thereafter directed to travel along individual channels of the first MCP **13a** as accelerated by the applied voltages. As known to those skilled in the art, since each channel of the MCP serves as an independent electron multiplier, the input ions **I** as received on the channel walls produce emission of secondary electrons (denoted as **e**⁻). These electrons are then accelerated by the potential gradient across the ends of each individual MCP **13a, 13b** of the MCP stack **102** and strike inner surfaces of the channel causing more emission of electrons that are released from the output end of the MCP stack **102.** This process substantially enables the preservation of the pattern (image) of the particles incident on the front surface of the MCP. When operated in negative ion mode, negative ions are initially converted to small positive ions that then induce a similar electron cascade as is well known in the art.

The biasing arrangement of the detector system **20** (FIG. 1C) also provides for the electrons multiplied by the MCP stack **102** to be further accelerated in order to strike an optical component, e.g., a phosphor coated fiber optic plate **15** configured behind the MCP stack **102.** Such an arrangement converts the signal electrons to a plurality of resultant photons (denoted as **p**) that are proportional to the amount of received electrons. Alternatively, an optical component, such as, for example, an aluminized phosphor screen can be provided with a biasing arrangement (not shown) such that the resultant electron cloud from the MCP stack **102** can be drawn across a gap by the high voltage onto a phosphor screen where the kinetic energy of the electrons is released as light. The initial assembly is configured with the goal of converting either a positive or negative ion image emanating from the quadrupole exit into a photon image suitable for acquisition by subsequent photon imaging technology.

The photons **p** emitted by the phosphor coated fiber optic plate or aluminized phosphor screen **15** are captured and then converted to electrons which are then translated into a digital signal by a two-dimensional camera component **25** (FIG. 1C). In the illustrated arrangement, a plate, such as, a photosensitive channel plate **10** assembly (shown with the anode output biased relative to ground) can convert each incoming photon **p** back into a photoelectron. Each photoelectron generates a cloud of secondary electrons **11** (indicated as **e**⁻) at the back of the photosensitive channel plate **10,** which spreads and impacts as one arrangement, an array of detection anodes **12,** such as, but not limited to, an two-dimensional array of resistive structures, a two-dimensional delay line wedge and strip design, as well as a commercial or custom delay-line anode readout. As part of the design, the photosensitive channel plate **10** and the anodes **12** are in a sealed vacuum enclosure (not shown).

Each of the anodes of the two-dimensional camera **25** shown in FIG. 1C can be coupled to an independent amplifier **14** and additional analog to digital converter (ADC) **18** as known in the art. For example, such independent amplification can be by way of differential transimpedance amplifiers or avalanche photodiodes (APD) to improve the signal-to-noise ratio and transform detected current into voltage. The signals resultant from amplifiers **14** and ADC **18** and/or charge integrators (not shown) can eventually be directed to a Field Programmable Gate Array (FPGA) **22** via, for example, a serial LVDS (low-voltage differential signaling) high-speed digital interface **21,** which is a component designed for low power consumption and high noise immunity for the anticipated data rates. The FPGA **21,** when electrically coupled to a computer or other data processing means **26,** may be operated as an application-specific hardware accelerator for the required computationally intensive tasks.

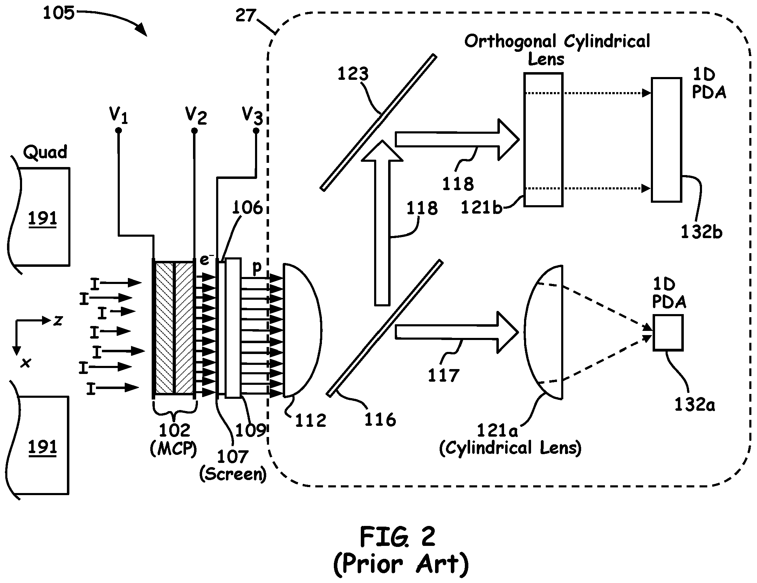

FIG. 2 schematically depicts another example of an imaging ion detection system as described in U.S. Pat. No. 9,355,828. The imaging ion detection system is shown generally in FIG. 2 as detector system **100.** The ions **I** exiting from an ion occupation region between quadrupole rod electrodes **191**are converted to electrons and the electron current is amplified by microchannel plate assembly or stack **102** comprising one or a plurality of microchannel plates as previously described with reference to FIG. 1C. It is preferable to generate photons, within the system **100,** using a substrate plate **109** comprising a single-piece or integral component (such as a plate of glass, mica or plastic) that is coated with a transparent material, such as indium tin oxide, comprising a biasing electrode **106** and further coated with a phosphor material comprising a phosphorescent screen **107.** A phosphor-coated plate comprising a bundle of fibers (such as plate **15** employed in the system **20** illustrated in FIG. 1C) may alternatively be employed as the substrate plate **109.** Voltages *V*₁ and *V*₂ are applied to electrodes at opposite ends of the MCP stack **102** so as to draw ions **I** onto the stack and to accelerate generated electrons (denoted as **e**⁻) through the stack. A voltage *V*₃ is applied to the transparent electrode **106** to draw the electrons onto the phosphorescent screen **107** at which photons (denoted as **p)** are generated.

The set of components **27** shown on the right hand side of the substrate plate **109** in FIG. 2 serve to replace the two-dimensional camera **25** that is depicted in FIG. 1C. The replacement components comprise two separate linear (one-dimensional or "1-D") photo-detector arrays **132a, 132b** and associated optics. In operation, the phosphorescent screen **107** radiantly "glows" with a spatially-non-uniform intensity as it is impacted by electrons **e**⁻ that are generated as a result of impingement of ions **I** onto the microchannel plate assembly or stack **102.** The pattern of this spatially-non-uniform glow at any time corresponds to the spatial distribution of the number of ions emitted from between the quadrupole rods **191**at such time. Lens **112** and cylindrical lens **121a** serve to transfer an image of the glowing phosphorescent screen onto a first linear photo-detector array (PDA) **132a.** Likewise, lens **112** and cylindrical lens **121b** serve to transfer a duplicate image of the glowing phosphorescent screen onto a second linear photo-detector array array **132b.** An axis of cylindrical lens **121b** is oriented substantially perpendicular to an axis of cylindrical lens **121a.** Similarly, the individual light sensitive elements of photo-detector array **132b** are aligned along a line that is substantially perpendicular to a second line along which the individual light sensitive elements of linear photo-detector array **132a** are aligned. The illustrated difference in shape between the first and second cylindrical lenses **121a, 121b** is employed so as to indicate that the second cylindrical lens comprises an orientation that is rotated o that its axis is orthogonal to the first cylindrical lens.

Light comprising photons that are generated by the phosphorescent screen **107** and that pass through the substrate plate **109** is collected and partially collimated into a light beam by a light collection lens **112.** The partially collimated light beam is then split into two lightbeam portions along two respective pathways by a beam splitter **116.** A first such pathway - traversed by a first light beam portion - is indicated in FIG. 2 by arrows **117** and a second such pathway - traversed by the second light beam portion - is indicated by arrows **118.** These light beam portions thus transfer two copies of the image information. Each of these light beam portions may then comprise about half the intensity of the original light source. Alternatively, the beam splitter **116** may be configured such that the ratio between the intensities of the transmitted and reflected light beam portions is other than one-to-one (1:1), such as, for example, nine-to-one (9:1), four-to-one (4:1), one-to-four (1:4), one-to-nine (1:9), etc. Such beam splitters are commercially available as either off-the-shelf stock items or can be custom fabricated in almost any desired transmitted-to-reflected ratio. A beam splitter in which the transmitted-to-reflected ratio is other than 1:1 may be employed, for example, to deliver a greater proportion of the light beam intensity to a detector having less sensitivity or to deliver a lesser proportion to a detector which might be easily saturated.

Each of the two light beam portions is focused by a respective one of the cylindrical lenses **121a, 121b** so as to project a respective one-dimensional image of the phosphor screen onto a onto a respective one of the linear photo-detector arrays **132a, 132b.** Optionally, a reflecting device **123** comprising, such as a flat mirror or a prism, may be employed within one of the beam pathways to cause both beams to be parallel. The deflection of one of the beams by the reflecting device **123** may be used to decrease the size of the system **100** or possibly to facilitate mechanical mounting of the two linear photo-detector arrays **132a, 132b** to a common circuit board and drive electronics.

According to the configuration illustrated in FIG. 2, the light beam portion that traverses the pathway indicated by arrow **117** is compressed within the x-dimension (see Cartesian axes on left side of FIG. 2) so as to be focused to a line (i.e., a line parallel to the *y-*dimension, perpendicular to the plane of the drawing of FIG. 2) that is coincident with the position of the first linear photo-detector array **132a.** Similarly, the light beam portion that traverses the pathway indicated by arrow **118** is compressed within the *y*-dimension so as to be focused to a line that is parallel to the *x*-dimension and that is coincident with the position of the second linear photo-detector array **132b.** The light-sensitive regions of the linear photo-detector arrays **132a, 132b** are disposed at the foci of the cylindrical lenses **121a, 121b** such that each of the light beam portions is focused to a line on the light sensitive region of the respective linear photo-detector array **132a, 132b.** The first and second linear photo-detector arrays **132a, 132b** may comprise, without limitation, two line cameras. The first and second linear photo-detector arrays **132a, 132b** may be substantially identical to one another. However, the first and second linear photo-detector arrays **132a, 132b** are depicted differently in FIG. 2 to indicate that the orientation of the second linear photo-detector array **132b** is rotated so as to be orthogonal to the first linear photo-detector array **132b.**

FIG. 3 is a schematic depiction of light receiving face of a general linear photo-detector array **132.** The array comprises a plurality of individual, independent light-sensitive elements **133,** which may be referred to as "pixels". In the system **100** illustrated in FIG. 2 (as well as in other system embodiments taught herein), an instance of the array **132** may be optically interfaced to either a cylindrical lens **120a, 120b** or a line-focusing composite lens with the linearly disposed plurality of pixels oriented so as to be coincident with a line focus produced by the cylindrical lens or composite lens.

As illustrated in FIG. 2, each linear photo-detector array retains image variation along the dimension parallel to the array and sums (or "bins") image information orthogonal to the array. Because two mutually orthogonal arrays are employed, image variation parallel to both the x-direction and the y-direction (as defined above for quadrupole apparatuses) is retained. Binning the information is a very useful method of data compression without losing much information. The system configuration depicted in FIG. 2 employs optics to enable the use of two separate, simpler, photo-detector arrays, such as line cameras, to provide the same orthogonal information as the previously-described two-dimensional camera **25** (FIG. 1C).

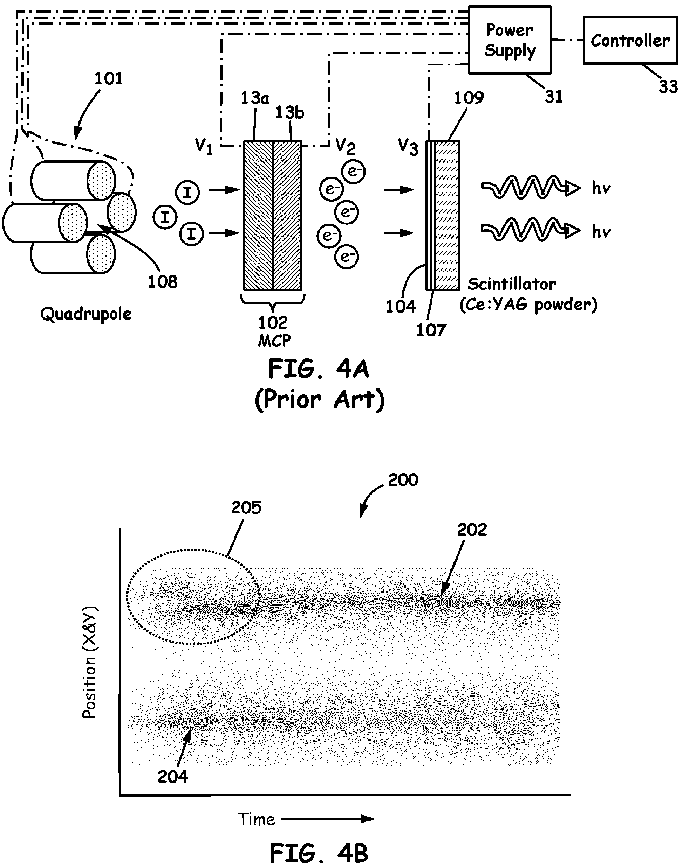

FIG. 4A is a simplified depiction of a portion of a known time and position imaging ion detector system for a mass spectrometer. As noted above, a stream or flux of ions **I** that are emitted from an exit aperture **108** of a quadrupole **101** comprising four parallel rods are intercepted by a stack **102** of microchannel plates **13a, 13b.** In response to the impingement of the ions, a stream or flux of electrons **e**⁻ are ejected from the MCP stack. The stream or flux of electrons retains spatial information pertaining to the original flux density of intercepted ions at each position on the MCP stack. These electrons are intercepted by a scintillator substrate plate **109** that is coated with a phosphorescent material **107.** Conventionally, the phosphorescent material is a sintered powder of e.g. Ce:YAG (cerium-doped yttrium-aluminum garnet). The ions **I** are urged towards the MCP stack from the quadrupole **101** under the influence of biasing voltage *V*₁ provided by high-voltage supply **31.** Ejected electrons are propelled from the first MCP **13a** to the second MCP **13b** and then to the scintillator plate **109** under the influence of biasing voltages *V*₂ and *V*₃, the latter of which may be supplied to a thin-film electrode coating **104** on the scintillator. The applied voltages, *V*₁ and *V*₂ provide for a 2 kV voltage gradient to provide the gain between the plates. All high voltages portions are under vacuum. An electronic controller **33,** which may be a programmed computer or other integrated circuitry that is programmed by firmware, controls the application of voltages to the MCP and electrode **104** and also controls the application of radio frequency (RF) and other voltages to the rod electrodes of quadrupole **101.**

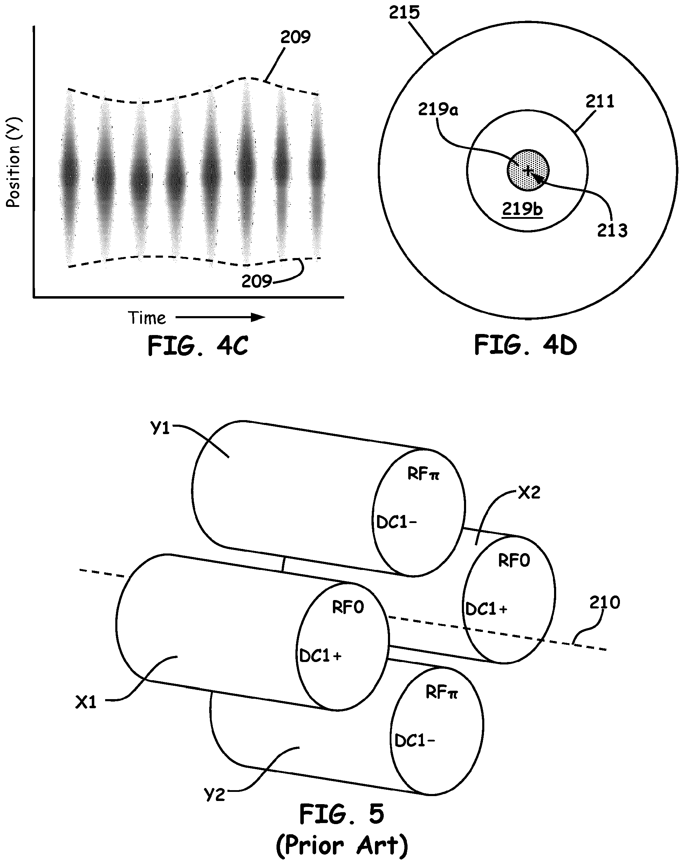

The first two components of the detection system (the MCP and the scintillator material) often age unevenly in a short period of time as a result of being impacted by highly intense ion beams that can be focused at specific spots on the MCP and scintillator surfaces within one or more quadrupole **101** RF cycles under vacuum (e.g., 10⁻⁵ to 10⁻⁶ torr). For example, FIG. 4B shows a time series of ion images of monoisotopic polytyrosine-1 that was captured by a detector system having the components that are illustrated in FIG. 4A. The abscissa in FIG. 4B represents time and the ordinate represents displacement of images along both the *y*-axis (profile **202** along the top portion of the graph) and along the *x*-axis (profile **204** along the bottom portion). The signal intensity is represented by the darkness of the shading. The apparent asymmetric ion trajectories observed in the *y*-dimension at location **205** are due, in part, to the uneven gain distribution of the detection area. The uneven gain across portions of the MCP and/or phosphor surfaces as a result of rapid ion aging imposes an asymmetric wave profile in the time series of images along the *y*-dimension, as indicated by envelope **209** in FIG. 4C.

In reality, high gains/potentials on both the MCP and the phosphor are often required in order to achieve the detection of single ion event that is a standard requirement for a commercial quadrupole mass spectrometer instrument. The most severe aging is found to occur at positions on the MCP and scintillator at which the beam focuses. Longevity studies on the MCP and phosphor indicate that significant gain changes at specific spots on these plate surfaces over the course of a single week of ordinary quadrupole mass spectrometer operation. FIG. 4D is a schematic depiction of the zone of impingement **211** of ions or electrons on the surface of either a microchannel plate or a scintillator of an imaging ion detector system such as the systems illustrated in FIG. 1C and FIG. 2. In this discussion, the term "transducer" is used to represent either a microchannel plate or a scintillator plate and is identified in the description of the drawings as transducer **215.** In other words, each drawing in which transducer **215** is illustrated may represent either or both of two different objects - a first object in which transducer **215** is a microchannel plate and, possibly, a second object in which transducer **215** is a scintillator plate. In the case in which the transducer is a microchannel plate (MCP), the charged particles are ions; in the case in which the transducer is a scintillator plate, the charged particles are electrons. In either case, the center of the transducer surface is depicted at **213.**

The region of ion impingement **211** of the transducer **215** comprises two sub-regions, denoted as sub-region **219a** and sub-region **219b.** Sub-region **219a** is a portion of the region **211** within which the charged particles carry sufficient energy to cause rapid degradation of the response of the transducer for a period of time after the transducer is put into service. Sub-region **219b,** which is the remainder of zone of impingement region **211,** is a portion of the transducer surface within which a measurable amount of charged particles impact the transducer surface but within which the total energy flux is not so great as to cause significant change in the response of a new transducer over short time periods (e.g., several weeks). Although drawn in FIG. 4D with sharp demarcation lines, the outer boundary of region **211** and the boundary between sub-region **219a** and sub-region **219b** are in fact gradational. Also, the relative dimensions of the transducer **215** and the regions **219a-219b** are schematic and not necessarily drawn to scale.

When the transducer **215** is appropriately aligned near an exit aperture of the rods **X1**, **X2, Y1**, **Y2** (see FIG. 5A), of a quadrupole mass analyzer, the transducer center **213** coincides with the projection of the central longitudinal axis **210** of the quadrupole onto the surface. Because the central longitudinal axis is the location of a pseudopotential well within the quadrupole, all ions that have stable trajectories oscillate about that axis and pass multiple times through a narrow region about the axis as they move through the quadrupole. Accordingly, the sub-region **219a** of an MCP receives the greatest quantity of ions over time and the sub-region **219a** of a corresponding scintillator plate receives the greatest quantity of electrons over time because of guiding of the ions by a great potential difference along the central longitudinal axis **210.** Thus, the sub-region **219a** is herein referred to as the zone of ion focusing and is the zone of greatest signal intensity in an ion image produced by an imaging system of the type depicted in FIG. 1C and FIG. 2. Unfortunately, the image details derived from the sub-region **219a** can be biased by the transducer aging over the time because the sub-region **219a** has the greatest probability of being impacted by ions or electrons, regardless of *m*/*z* value. Conversely, the signal derived from sub-region **219b** is less intense than the signal derived from sub-region **219b** but nonetheless exhibits greater variability with *m*/*z* (see FIG. 1B). Mathematical analysis of a time sequence of images requires information from both of the sub-regions **219a**, **219b** in order to fully resolve component signals corresponding to different respective ion *m*/*z* values.

The data processing of imaging quadrupole mass spectrometer systems such as those depicted in FIG. 1C and FIG. 2 comprises deconvolution steps that decompose the complex overlapping data generated by multiple emergent ion species into individual component images, where each component image relates to a one of those species. The data processing further comprises recognition of the temporal variation of such component images. Such data processing steps, which are sensitive to variations of spatial patterns of emerging ions, require consistent measurements from the detection system. If the sensitivity of the detection system should deviate from its condition during the most recent calibration, then system re-calibration is required to prevent data processing performance degradation or complete failure. A weekly calibration schedule, as suggested by longevity experiments, may not be acceptable for most users. Accordingly, there is a need in the art to expand the effective period of the detector calibration in quadrupole mass spectrometer systems that detect ion spatial patterns.
US 2011/095177 A1 discloses a detection apparatus for detecting charged particles having a secondary particle generator for generating secondary charged particles in response to receiving incoming charged particles, a charged particle detector for receiving and detecting secondary charged particles generated by the secondary particle generator, a photon generator for generating photons in response to receiving secondary charged particles generated by the secondary particle generator, and a photon detector for detecting the photons generated by the photon generator.
US 2011/095178 A1 discloses detection apparatus for detecting charged particles having a charged particle detector for receiving and detecting either incoming charged particles or secondary charged particles generated from the incoming charged particles, a photon generator for generating photons in response to receiving at least some of the same incoming charged particles or secondary charged particles generated from the incoming charged particles as are received and detected by the charged particle detector, and a photon detector for detecting photons generated by the photon generator.
"Micro-channel plates and vacuum detectors" (Gys T, Nuclear Instruments and Methods in Physics Research A, vol. 787, 2015, pages 254-260, doi 10.1016/J.NIMA.2014.12.044) discusses micro-channel plates (arrays of miniature electron multipliers that are each acting as a continuous dynode chain). It covers the history of the micro-channel plate development, their basic features and some of their applications, as well as various manufacturing processes that result in improvements in terms of efficiency, noise and lifetime performance.

### SUMMARY

In view of the needs in the art of mass spectrometry, the inventor has devised apparatus and methods to prolong the duration of time that a single calibration may be successfully employed when performing mass analyses with a time and position imaging mass spectrometer. Apparatuses in accordance with the present invention incorporate
(a)a stack of, e.g. three or more, micro-channel plates (MCPs), and
(b) a scintillator plate comprising a single crystal plate of a phosphorescent material, e.g. a Ce:GAGG (cerium-doped gadolinium aluminum gallium garnet). The multi-plate MCP stack comprising three or more individual plates that disperse the potential gradient such that the aging of each plate during mass spectrometer operation is more gradual over time as compared to operation using fewer than three plates. For a high MCP gain operation, the plates at the end stage that receives most electrons may require a pre-aging process to stabilize the gain variation. The use of Ce:GAGG as a phosphorescent material is found to yield a higher photon gain than does the conventional Ce:YAG, while also exhibiting more resistance to aging.

The present teachings also includes various methods of operation of a time and position imaging mass spectrometer that reduce the rate of aging of MCP and scintillator components (both referred to as "transducers" in the present document). In a first set of such methods, an MCP stack and/or a scintillator is/are physically migrated over the course of operation of the mass spectrometer, such that an ion beam, in the case of an MCP stack, or a beam of electrons, in the case of a scintillator, is/are caused to migrate across the face of the respective transducer, thereby reducing the rate of exposure of any point on a scintillator surface to a beam of incident charged particles. The movement of the transducer(s) may be either continuous or stepwise and, preferably, is effected by at least two mechanical actuators physically coupled to a carriage to which the transducers are mounted. Preferably, a first actuator and a second actuator effect movement in mutually orthogonal directions, such as along the x-axis and along the *y*-axis, these axes being defined in relation to the quadruple axes. The movement may be parallel to either axis or, alternatively, may be at an non-parallel to both axes. Preferably, the movement of the transducers is in accordance with a pre-defined pattern of movement.

According to a second set of methods in accordance with the present teachings, an MCP stack and/or a scintillator is/are maintained stationary with respect to the quadrupole while an ion beam within the quadrupole is caused to migrate about the central longitudinal axis by controlled application of separate, independent, non-equal DC potentials to at least two rods that are diametrically opposed to one another with respect to the quadrupole's central longitudinal axis. Similar to the effect of physical movement of the transducers, the execution of this method may cause an ion beam to gradually migrate about the surface of the MCP. The corresponding electron is thereby simultaneously caused to migrate about the surface of the associated scintillator plate. Imbalanced voltages may be controllably applied across the pair of x-rods and across the pair of *y*-rods such that the particle beams are caused to migrate in accordance with a predetermined pattern relative to the *x* and *y* axes. The migration of the ion beam may be either continuous or stepwise.

The above-outlined methods, in which either the ion beam or a transducer is repositioned or migrated, assures that the ion beam or electron beam does not remain stationary at any one particular position of the associated transducer for an extended period of time, thereby reducing the rate of response degradation across the transducer surfaces and permitting an imaging mass spectrometer ion detector to operate for extended periods of time between calibrations. These methods may be employed in conjunction with a known time and position imaging mass spectrometer detector system, such as one of the detector systems illustrated in FIG. 1C and FIG. 2 or other such systems as described in U.S. Patent No. 8,389,929. Alternatively, these methods may be employed in conjunction with a time and position imaging mass spectrometer detector system that is modified with either one or both of the modifications illustrated in FIG. 5B.

According to another set of methods in accordance with the present teachings, a time and position imaging mass spectrometer is operated such that a supplemental low-frequency alternating-current (AC) voltage waveform is applied to rods of the quadrupole. The frequency (or component frequencies) of the AC wave is/are chosen to match to the secular frequency or frequencies of targeted mass-to-charge ratios during a mass analysis experiment. This low-frequency AC waveform may be phase synchronized to the scanning RF waveform and can be applied on either two pairs of the rods with opposite phase or on just one opposing pair of the rods. As is well known in the art of mass spectrometry, such resonant excitation imparts additional energy to the ions comprising the targeted *m*/*z* values, thus increasing the oscillation amplitude of such excited ions. The amplitude of the AC waveform is chosen such the ions having the targeted *m*/*z* values are caused to have a greater probability of being detected away from (instead of within) the zone of ion focusing and such that the targeted ions are not laterally ejected from the interior of the quadrupole. The increased oscillation amplitude of these ions causes a diminishing of ion flux at the center of a transducer, thus reducing the rate of aging of the transducer within the mass spectrometer.

According to another set of methods in accordance with the present teachings, a transducer (either an MCP or a scintillator) may be "pre-aged" prior to putting the transducer into service within a time and position imaging mass spectrometer system. The methods of the present invention are however limited to the ones wherein pre-aging is performed on a front face of a microchannel of a MCP. The pre-aging may be effected by causing a beam of electrons to impinge upon all or a portion of a surface of a transducer, under the impetus of an electrical potential difference between the emitter and the transducer. Once placed into service within a mass spectrometer, the pre-aged portions of the transducer will be less susceptible to additional degradation of transducer response as compared to non-aged transducers or non-aged portions of a single transducer. By this means, the duration of the validity of mass spectrometer detector calibrations may be prolonged once the transducer is placed into service, since the utility of such calibrations depends upon constancy of detector response.

The pre-aging of a transducer may be, in embodiments not covered by the invention, uniform across the surface of the transducer or, alternatively as in the embodiments of the present invention, in accordance with a pre-determined pattern. In some methods of the present teachings, an aging pattern may imposed upon the transducer by selectively and controllably sweeping or rastering the electron beam across all or portions of the transducer. The sweeping or rastering of the beam may be accomplished by either physical movement of the emitter and transducer relative to one another or, preferably, by controlled progressive electromagnetic deflection of the beam according to a raster pattern. In other methods of the present teachings, the aging pattern may be imposed upon the transducer by passing the electron beam through a mask that it interposed between the electron emitter and the transducer, wherein the mask comprises an encoded beam attenuation pattern that corresponds to or reflects a desired pre-aging pattern of the transducer. According to this method, the emitter, mask and transducer are preferably configured such that there is a one-to-one mapping between each point on the transducer at which the electron beam is incident and each point of the mask through which the beam passes. The degree of beam attenuation at each point on the mask is then reflected, in an inverse sense, in the number of electrons that are allowed to impact the respective corresponding point on the transducer surface.

The final imposed pattern, as a result of either beam sweeping or rastering or mask attenuation, comprises different degrees of pre-aging at different portions of the transducer. In other words, the amount of pre-aging is a function of position on the transducer surface, the function corresponding to or being a reflection of the pre-determined pattern. The predetermined pre-aging pattern is, in accordance with the present invention, chosen to correspond to an expected pattern of ion flux emerging from a quadrupole mass analyzer. Preferably, the degree of pre-aging is greatest at a position of positions on the transducer surface upon which the greatest number of ions are expected to impinge. Accordingly, the pattern of aging of the pre-aged transducer is positioned or rotationally aligned with quadrupole rods in a mass spectrometer in accordance with a pre-determined alignment orientation such that the imposed pre-aging pattern corresponds to a pattern of expected ion flux. Generally, the greatest number of ions are expected at a zone of ion focusing that corresponds to a central region surrounding a point that corresponds to an extension of a quadrupole's central longitudinal axis. With the transducer appropriately position and/or aligned and the ion flux pattern as expected, the portions of an ion beam comprising the greatest ion flux will intercept the transducer surface at the regions of greatest degree of pre-aging, at which the transducer is least susceptible to degradation of its response. At the same time, the more-usefully-diagnostic portions of the ion beam comprising lesser beam flux will intercept the transducer at the regions of least or no pre-aging, at which the transducer is most sensitive to small variations in beam flux.

A transducer that is pre-aged specifically for use in a time and position imaging mass spectrometer is considered to be an apparatus for use in the system of the present invention. Likewise, the method of pre-aging a front face of a microchannel of a MCP specifically for use within a time and position imaging mass spectrometer is considered to be a method for the method of the present invention. teachings. Similarly, operation of a time and position imaging mass spectrometer using such a pre-aged front face of a microchannel of a MCP is considered to be a method for the method of the present invention.

A time and position imaging mass spectrometer that is in accordance with the present teachings may be operated in accordance with any method that is in accordance with the present invention as claimed. For example, a time and position imaging mass spectrometer that includes:
(a) an MCP comprising three or more plates; (b) a scintillator of the composition described herein; and (c) one or more pre-aged scintillators may be operated in accordance with any combination of: (1) scintillator physical position migration; (2) ion beam positional migration; and (3) expansion of an ion beam by resonant excitation of one or more selected targeted *m*/*z* values. All such combinations can be used in a method of performing mass spectrometric analysis in accordance with the present invention.

### BRIEF DESCRIPTION OF THE DRAWINGS

The above noted and various other aspects of the present invention will become further apparent from the following description which is given by way of example only and with reference to the accompanying drawings, not drawn to scale, in which:
FIG. 1A is a schematic example configuration of a triple stage mass spectrometer system;
FIG. 1B is a simulated recorded image of a multiple distinct species of ions as collected at the exit aperture of a quadrupole at a particular instant in time;
FIG. 1C is a schematic depiction of a known time and position imaging ion detector system configured with a linear array of read-out anodes;
FIG. 2 is a schematic depiction of a second known time and position imaging ion detector system that employs two linear photo-detector arrays;
FIG. 3 is a schematic illustration of a linear photo-detector array;
FIG. 4A is a schematic depiction of a known imaging ion detector having a microchannel plate and a scintillator;
FIG. 4B is a graphical depiction of the measured time variation of detected ion current along both the X- and *y*-directions of ions emitted from a quadrupole mass analyzer, as measured by an apparatus of the type illustrated in FIGS. 1C and 2;
FIG. 4C is an expanded view of the variation of detected ion current along the *y-*direction at the exit aperture of a quadrupole mass analyzer, as measured by an apparatus comprising the components depicted in FIG. 4A;
FIG. 4D is schematic depiction of the zone of impingement of ions or electrons on the surface of either a microchannel plate or a scintillator of an imaging ion detector system, further illustrating a zone of accelerated aging of the microchannel plate or scintillator;
FIG. 5 is a schematic depiction of a set of quadrupole rods of a mass analyzer indicating the conventional application of scanning radio-frequency (RF) voltage (labeled as **RF0** and **RFπ)** and a scanning direct-current (DC) voltage (labeled as **DC1+** and **DC1-)** to the rods;
FIG. 6 is a schematic depiction of an imaging ion detector having a stack of microchannel plates and a scintillator in accordance with the present teachings;
FIG. 7 is a schematic depiction of an example pattern of migration of a charged particle beam over the surface of a microchannel plate during transmission of ions onto the microchannel plate during a course of mass analysis during which the microchannel plate is physically moved with respect to the quadruple, the pattern also pertaining to an associated scintillator if the scintillator is moved in concert with the movement of the microchannel plate;
FIG. 8A is a schematic depiction of a set of quadrupole rods of a mass analyzer indicating the application, to the rods, of a scanning RF voltage (labeled as **RF0** and **RFπ),** a first (scanning) DC1 voltage (labeled as **DC1+** and **DC1-)** and a steering DC voltage (labeled as **DC2a** through **DC2b);**
FIG. 8B is a schematic depiction of a pattern of steering of an ion beam on a microchannel plate such that aging of the microchannel plate and an associated scintillator is evenly distributed over a certain region of each of the microchannel plate and scintillator;
FIG. 9A is a schematic depiction of a set of quadrupole rods of a mass analyzer indicating the application, to the rods, of a scanning RF voltage (labeled as **RF0** and **RFπ),** a scanning DC voltage (labeled as **DC1+** and **DC1-)** and a supplemental oscillatory resonant excitation voltage (labeled as **AC0** and **ACπ**);
FIG. 9B is is a schematic depiction of shrinkage of the zone of maximum charged particle flux incident onto a microchannel plate or a scintillator under the application of a supplemental oscillatory resonant excitation voltage to the rods of a quadrupole mass analyzer to which the microchannel plate and scintillator are coupled;
FIG. 10A is a schematic depiction of a method, in accordance with the present teachings, for pre-aging a microchannel plate or a scintillator for use in a mass spectrometer ion imaging detector apparatus;
FIG. 10B is a schematic depiction of an alternative method, in accordance with the present teachings, for pre-aging a microchannel plate or a scintillator for use in a mass spectrometer ion imaging detector apparatus;
FIG. 11A is a schematic diagram of a first exemplary pre-aging pattern of a microchannel plate or a scintillator in accordance with the present teachings;
FIG. 11B is a schematic diagram of a second exemplary pre-aging pattern of a microchannel plate or a scintillator in accordance with the present teachings;
FIG. 11C is a schematic diagram of a third exemplary pre-aging pattern of a microchannel plate or a scintillator in accordance with the present teachings;
FIG. 11D is a schematic diagram of a fourth exemplary pre-aging pattern of a microchannel plate or a scintillator in accordance with the present teachings;
FIG. 12A is a schematic depiction of a cross-section of a quadrupole mass filter at its exit aperture showing an expected distribution of ions exiting the apparatus under application of a conventional ramped oscillatory RF voltage and a conventional ramped DC scanning potential difference to the rod electrodes;
FIG. 12B is a schematic depiction of a cross-section of a quadrupole mass filter at its exit aperture, as in FIG. 12A, showing an expected distribution of ions exiting the apparatus under the application of the RF and DC voltages as in FIG. 12A and as supplemented by an additional applied constant DC potential difference between the X-rods and an applied constant DC potential difference between the Y-rods; and
FIG. 13 is a schematic depiction of a Mathieu diagram showing hypothetical plot points corresponding to ions of different *m*/*z* ratios along a hypothetical scan line.

### DETAILED DESCRIPTION

The following description is presented to enable any person skilled in the art to make and use the invention, and is provided in the context of a particular application and its requirements. Various modifications to the described embodiments will be readily apparent to those skilled in the art and the generic principles herein may be applied to other embodiments without departing from the extent of the invention as determined by the appended claims. The particular features and advantages of the invention will become more apparent with reference to the appended FIGS. 1-13.

In the description of the invention herein, it is understood that a word appearing in the singular encompasses its plural counterpart, and a word appearing in the plural encompasses its singular counterpart, unless implicitly or explicitly understood or stated otherwise. Furthermore, it is understood that for any given component or embodiment described herein, any of the possible candidates or alternatives listed for that component may generally be used individually or in combination with one another, without departing from the scope of the invention as claimed. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of such candidates or alternatives is merely illustrative, not limiting, unless implicitly or explicitly understood or stated otherwise.

Unless otherwise defined, all technical and scientific terms used herein have the meaning commonly understood by one of ordinary skill in the art to which this invention belongs. In case of conflict, the present specification, including definitions, will control. It will be appreciated that there is an implied "about" prior to the quantitative terms mentioned in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular. As used herein, and as commonly used in the art of mass spectrometry, the term "DC" does not specifically refer to or necessarily imply the flow of an electric current but, instead, refers to a non-oscillatory voltage which may be either constant or variable. Likewise, as used herein, and as commonly used in the art of mass spectrometry, the term "AC" does not specifically refer to or necessarily imply the existence of an alternating current but, instead, refers to an oscillatory voltage or oscillatory voltage waveform. The term "RF" refers to an oscillatory voltage or oscillatory voltage waveform for which the frequency of oscillation is in the radio-frequency range.

FIG. 5 is a schematic depiction of a set of quadrupole rods of a mass analyzer. By convention, the four rods are described as a pair of x-rods, denoted in the drawing as rods **X1** and **X2,** and a pair of y-rods, denoted in the drawing as rods **Y1** and **Y2.** The pair of x-rods defines an x-axis that is orthogonal to the long dimension of the rods; likewise, the pair of y-rods defines a *y*-axis that is orthogonal to both the long dimension of the rods and the x-axis. The four rods together define a central longitudinal axis **210** that is parallel to and disposed midway between the four rods. The central longitudinal axis **210** is also denoted as the z-axis which is orthogonal to both the x-axis and *y*-axis.

As in conventional operation, a scanning radio-frequency (RF) oscillatory voltage, **RFC, RFπ,** and a scanning direct-current (DC) voltage, **DC1+, DC1-,** are applied to the rods, with the RF phase applied to the x-rods being exactly **π** radians out of phase with respect to the phase applied to the y-rods. In other words, the RF potential on the y-rods is inverted with respect to the x-rods. These two phases of RF are thus respectively denoted as **RF0** and **RFπ** in FIG. 5. At any instant of time, the two x-rods have the same potential as each other, as do the two y-rods. Relative to the constant potential at the central longitudinal axis **210,** the potential on each set of rods can be expressed as having a DC component plus an RF component that oscillates rapidly (with a typical frequency of about 1 MHz). The DC potential on the x-rods is positive (relative to the potential on the z-axis) so that a positive ion feels a restoring force that tends to keep it near the z-axis; the potential in the x-direction is like a well. Conversely, the DC potential on the y-rods is negative (relative to the potential on the z-axis) so that a positive ion feels a repulsive force that drives it further away from the z-axis; the potential in the *y-*direction is thus like a peak. In accordance with the above observations, the DC potential on the x-rods is denoted as **DC1+** and the DC potential on the y-rods is denoted as **DC1-** in FIG. 5 and similar figures. The term "DC voltage", as used herein, refers to the difference between these two potentials.

Within the quadrupole, ions move inertially along the z-axis from the entrance of the quadrupole to a detector often placed at the exit of the quadrupole. The ions have trajectories that are separable in the *x* and *y* directions inside the quadrupole. In the *x*-direction, the applied RF field carries ions with the smallest mass-to-charge ratios out of the potential well and into the rods. Ions with sufficiently high mass-to-charge ratios remain trapped in the well and have stable trajectories in the *x*-direction; the applied field in the *x*-direction acts as a high-pass mass filter. Conversely, in the *y*-direction, only the lightest ions are stabilized by the applied RF field, which overcomes the tendency of the applied DC to pull them into the rods. Thus, the applied field in the *y*-direction acts as a low-pass mass filter. Ions that have both stable component trajectories in both *x* and *y* pass through the quadrupole to reach the detector. The DC offset and RF amplitude can be chosen so that only ions with a desired range of *m*/*z* values are measured. If the RF and DC voltages are fixed, the ions traverse the quadrupole from the entrance to the exit and exhibit exit patterns that are a periodic function of the containing RF phase. Although where the ions exit is based upon the separable motion, the observed ion oscillations are completely locked to the RF. As a result of operating a quadrupole in, for example, a mass filter mode, the scanning of the device by providing ramped RF and DC voltages naturally varies the spatial characteristics with time as observed at the exit aperture of the instrument. As is well-known, the applied DC voltage may be ramped in coordinated fashion with the amplitude of the applied RF voltage waveform such that the narrow range of *m*/*z* ratios progressively increases as the voltage magnitude and amplitude are ramped. Accordingly, in this document, the applied RF and DC voltages are referred to as scanning RF and scanning DC voltages, respectively.

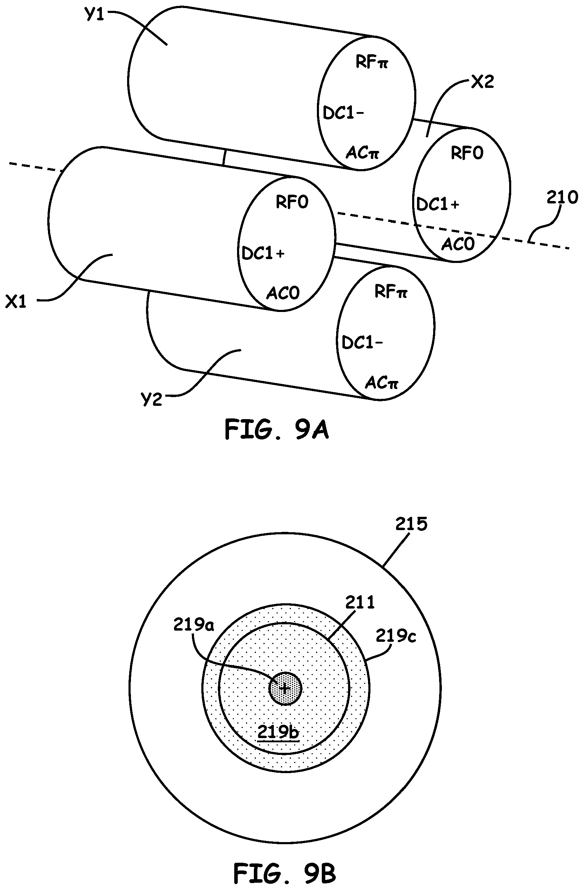

Furthermore, a supplemental resonant excitation alternating current (AC) voltage may optionally be applied to the rods for the purpose of selectively resonantly amplifying the spatial oscillations, about the axis 210, of ions having certain *m*/*z* values, as discussed further below. The applied AC voltage is an oscillatory voltage that is distinguished from the applied RF voltage by its much lower amplitude and somewhat lower frequency. The phases of the applied supplemental AC voltage are denoted, in FIG. 9A, as **AC+** and **AC-.**

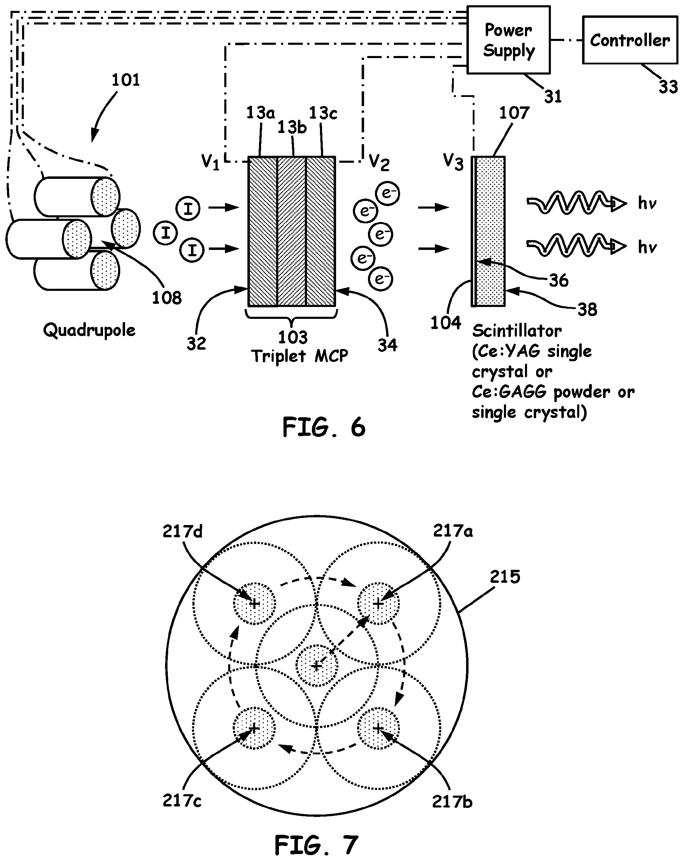

FIG. 6 schematically depicts a quadrupole rod set **101** and a portion of a time and position imaging ion detector system for a mass spectrometer in accordance with the present teachings. The configuration illustrated in FIG. 6 is very similar to the configuration of FIG. 4A. A stream or flux of ions **I** impinges on a front face **32** of MCP stack **103** and, in response, a stream or flux of electrons **e**⁻ are emitted from a rear face **34** of the MCP stack. The ions **I** are urged towards the MCP stack from the quadrupole **101** under the influence of biasing voltage *V*₁ provided by high-voltage supply **31.** Ejected electrons are propelled from the first (upstream) MCP **13a** of the stack to the last MCP **13c** (downstream) and then to a front surface **36** of a phosphorescent scintillator **107** under the influence of biasing voltages *V*₂ and *V*₃. The voltage *V*₃ may be supplied to a thin-film electrode coating **104** on the front surface **36** of the scintillator **107.** In response to the impingement of electrons on the front surface **36** of the scintillator **107,** photons (hv) are generated within the scintillator and emitted from its rear surface **38.**

An electronic controller **33,** which may be a programmed computer or other integrated circuitry that is programmed by firmware, controls the application of voltages to the MCP and electrode **104** and also controls the application of radio frequency (RF) and other voltages to the rod electrodes of quadrupole **101.** In well-known fashion, the electronic controller **33** may cause the power supply **31** to vary the application of scanning RF and scanning direct current (DC) voltages to the rods over the course of a scan time period during which these scanning voltages are controllably varied such that ions of progressively increasing or progressively decreasing *m*/*z* are emitted from the quadrupole exit aperture **108.** The electronic controller **33** may also cause the power supply **31** to apply additional voltages to the rods as in accordance with the present teachings and as discussed further herein below. The electronic controller **33** may also control the operation of optional actuators that are coupled to one or both of the scintillator **107** and the MCP stack **103** as discussed further herein below. The application of any additional voltages and operation of any actuators may, in some instances, be coordinated with or in synchronization with the application of the scanning RF and DC voltages to the quadrupole rods.

The configuration illustrated in FIG. 6 differs from that shown in FIG. 4A in that: (a) the scintillator **107** modified by replacement of the conventional Ce:YAG phosphor powder with a single crystal of phosphor material, e.g. Ce:YAG or Ce:GAGG (cerium-doped gadolinium aluminum gallium garnet); and (b) the MCP stack **103** comprises at least three separate microchannel plates, which are exemplified by plates **13a**, **13b** and **13c** in FIG. 6. Although both such modifications are illustrated in FIG. 6, alternative not covered by the claims are contemplated which only include one of modification (a) or modification (b) as listed above. As a further alternative not covered by the claims, the Ce:GAGG phosphor could be provided as a sintered powder on a front surface of a substrate plate **109,** in similarity to the system illustrated in FIG. 4A. The single crystal scintillator, which is the one employed in the present invention, has the form of a flat plate of thickness less than or equal to 1 millimeter.

The first above-noted modification to the detection system arises from the inventor's observations that single crystal scintillator plates are more resistant to aging than are powders and that the use of Ce: GAGG as a phosphorescent material yields a higher gain than Ce:YAG while also exhibiting greater resistance to aging. If the Ce:GAGG is provided as a sintered powder, then the configuration is as illustrated in FIG. 4A, with the Ce:GAGG powder coated onto a non-phosphorescent substrate plate. Alternatively, this material is available as a clear single-crystal plate having a thickness of approximately 100 µm. In the present invention, in which the scintillator (either Ce:YAG or Ce:GAGG) comprise a single crystal plate, there may be no substrate plate, since the scintillator plate **107** can itself be free standing. With regard to the MCP stack, when three or more microchannel plates are incorporated into such a Z stack, reduced ion feedback can slow down the photocathode aging. The potential gradient is also dispersed over the several plates, and thus each individual plate may experience less electron cluster bombardment when three or more microchannel plates are employed.

Various methods of operating a time and position imaging mass spectrometer so as to reduce the rate of aging of MCP and scintillator components (both referred to as "transducers" in the present document) are now discussed. According to a first set of such methods, a pair of actuators (not shown) are employed to cause motion of at least one of the stack of microchannel plates (MCP) and the scintillator relative to a stationary ion beam that is emergent from a quadrupole. Such methods cause migration of the ion beam across, over, about or around the surface of at least one of the transducers. Preferably, the transducer of transducers that are to be moved are supported on or in a moveable carriage (not shown) that is movably coupled to the mass spectrometer housing and that is coupled to the actuators and that is configured for translational motion within a plane that is parallel to both the *x* and *y* axes, as defined in reference to the associated quadrupole. In operation, the actuators are controlled as to migrate the position of at least one transducer or to simultaneously migrate the positions of both transducers with respect to the ion beam over the course of a pre-determined time period - such as a few days to a few weeks. By means of this gradual positional migration of the MCP and/or scintillator plate, the region of beam focusing is caused to continuously impinge upon a non-aged (or less-aged) portion of each transducer surface. The gradual migration of the ion or electron beam over the surface of the respective transducer extends the period of time between which the transducers need to be re-calibrated in order to account for the aging.

FIG. 7 is a schematic depiction of one example of a pattern of movement of an ion or electron beam plate over the surface of a transducer during a program of experimentation in which the position of the transducer is migrated by the coordinated operation of both a first actuator (not shown) that translates the transducer parallel to the *x*-direction and a second actuator (not shown) that translates the transducer parallel to the *y*-direction. Dashed-line arrows in FIG. 7 depict a hypothetical pattern of movement in which the beam position is first gradually displaced from its initial location at the center **213** of the transducer towards a location near the transducer periphery and then caused to migrate around the periphery. The positions **217a, 217b, 217c** and **217d** represent four such positions of the migrated beam. The beam position may not remain static at each illustrated position; in operation, there may be a continuum of intermediate positions between those that are illustrated as the beam continuously migrates about the surface of the transducer. Although the transducers **215** are caused to move relative to the ion beam during operation of this method, the image of the ion beam on the scintillator plate nonetheless remains fixed relative to the positions of the quadrupole, the ion beam and the optical lenses and detectors. Thus no modifications are required to the optics or to the detectors.

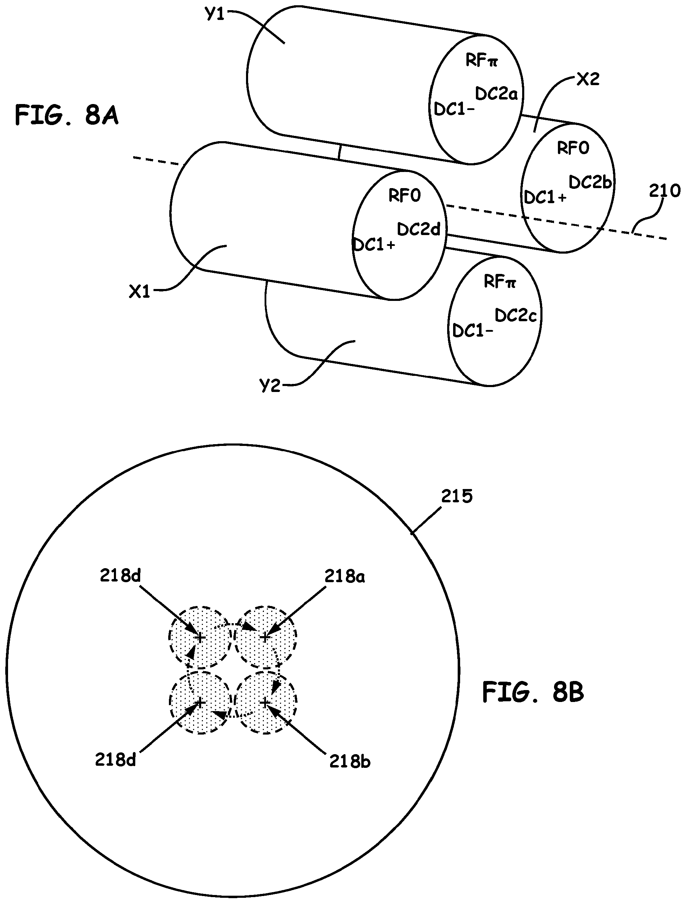

According to a second set of methods, in accordance with the present teachings, for migrating an ion beam relative to paired MCP and scintillator transducers, the transducers **215** remain fixed relative to the quadrupole. Instead, the ion beam is itself translated (referred to herein as "steering") by applying supplemental, independent DC potentials, denoted as **DC2a, DC2b, DC2c** and **DC2d** in FIG. 8A, to the quadrupole rods. Imbalanced potentials may be controllably applied across the two rods of either or both pairs of rods in which the rods are diametrically opposed to one another so as to cause the location of the pseudopotential well to shift laterally within the quadrupole. In other words, the potential imbalance may be across either the pair of x-rods and/or the pair of y-rods. The shift of the pseudopotential well causes a slight translation of the zone of maximum ion concentration within the quadrupole away from the quadrupole's central axis (which remains centrally located between the rods). This shifting of the ion beam causes the center of the region of ion impingement **211** to migrate away from the transducers' center **213.**

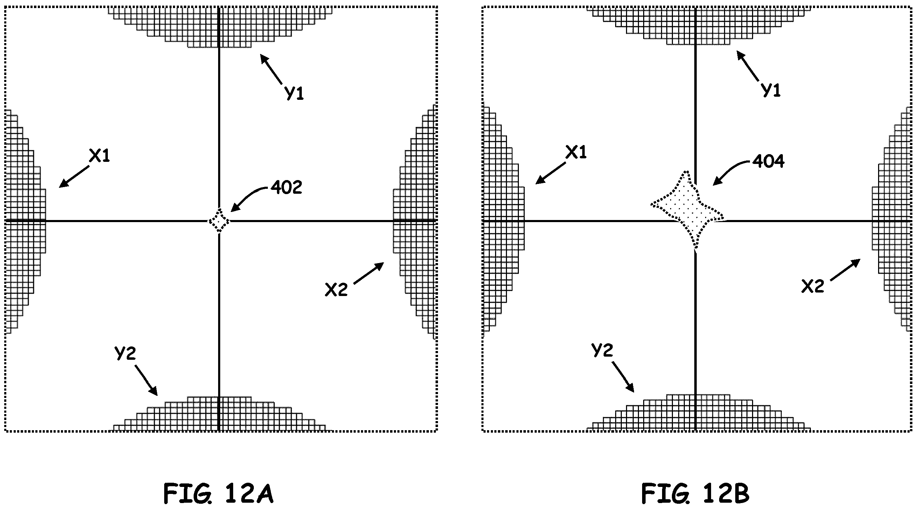

The above described ion beam shifting operations may be programmable. For example, if the voltage **DC2a** applied to rod **Y1** is more positive than the voltage **DC2c** applied to rod **Y2,** which is diametrically opposed to rod **Y1**, then a pseudopotential well will be displaced away from central longitudinal axis **210** in the direction of rod **Y2.** In this instance the center of a beam of positive ions within the rods will be similarly shifted. Conversely, if voltage **DC2c** is more positive than voltage **DC2a,** then the pseudopotential well will be displaced away from central longitudinal axis **210** in the direction of rod **Y1**. Likewise, differences between voltage **DC2b** and voltage **DC2d** may be applied in a way so as to shift the pseudopotential well in the direction of either rod **X1** or rod **X2.** FIG. 12A is a schematic depiction of a cross-section of a quadrupole mass filter at its exit aperture showing an expected distribution of ions exiting the apparatus under application of a conventional ramped oscillatory RF voltage, that is, without the application of the additional DC voltages **DC2a, DC2b, DC2c** and **DC2d**. It may be seen that, in this case, the ions exit the mass filter within a tightly restricted cloud **402** centered about the central axis of the apparatus. FIG. 12B illustrates a more-expanded distribution of exiting ions (cloud **404)** that is expected when a steering DC potential difference is applied between rods **X1** and **X2** and a similar-magnitude steering DC potential difference is applied between the rods **Y1** and **Y2.** In this case, the density of ions at the central axis is reduced, leading to a consequent reduction in the rate of a transducer that is disposed adjacent to the exit aperture.

As an added benefit, the provision of these programmable DC steering potentials may be used to effect controlled positional changes during the course of a single m/z scan so as provide a unique coding in the ion trajectories (e.g., a coding such as a constant offset, a spiral or periodical shifts that are phase synchronized to the applied RF). The controlled application of the DC steering potentials can cause beam migration around, about or across a transducer surface so as to reduce the rate of transducer response degradation at any one point on the surface. For example, FIG. 8B illustrates a hypothetical circular beam migration pattern, as might be produced by the application of appropriate beam steering potentials as described above. In this example, the beam repeatedly migrates from point **218a** to point **218b** to point **218c** and to point **218d** along the surface of microchannel plate **215.** The beam migration may be stepwise, as indicated by the dashed-line circles in FIG. 8B or, alternatively, may be continuous. A similar electron beam migration would occur around, about or across the surface of an associated scintillator. Other hypothetical beam migration patterns are possible, as well.

According to another set of methods in accordance with the present teachings, a supplemental oscillatory alternating current (AC) voltage may optionally be applied to the quadrupole rods for the purpose of selectively resonantly amplifying the spatial oscillations, about the axis **210,** of ions having certain *m*/*z* values. This oscillatory AC voltage is distinguished from the oscillatory RF voltage by its much lower amplitude and lower frequency. As is well known in the art of mass spectrometry, such resonant excitation imparts additional energy to the ions comprising the targeted *m*/*z* values, thus increasing the spatial oscillation amplitude of such excited ions. The amplitude of the AC waveform is chosen such the ions having the targeted *m*/*z* values are caused to have a greater probability of being detected away from (instead of within) the zone of ion focusing and such that the targeted ions are not laterally ejected from the interior of the quadrupole.

The increased oscillation amplitude of the resonantly excited ions causes a diminishing of charged particle flux within the central region **219a** of a transducer **215,** thus reducing the overall rate of aging of the transducer within the mass spectrometer. For example, with reference to FIG. 9B, an ion species having a particular *m*/*z* may impact an MCP **215** entirely within the region of ion impingement **211** in the absence of the application of the resonant excitation AC voltage. However, when the resonant excitation AC voltage is applied, the zone of impact may expand to encompass the entire stippled region **219c** because the portion of time spent within the zone of ion focusing by the resonantly excited ions is reduced. (The zone of ion focusing is a cylindrical region within the quadrupole that is concentric with and surrounds the central longitudinal axis **210.** The projection of this region onto the MCP **215** is represented as the darkly stippled zone **219a** in FIG. 9B) As a consequence, the overall ion flux density (ions-cm⁻²-sec⁻¹) within the stippled **219a** is reduced, thereby reducing the rate of aging in this region.

The low frequency AC wave that may be phase synchronized to the RF wave can be applied on both pairs of rods, with opposite phase across the rods of each pair (i.e., a quadrupole excitation) or, alternatively, across just one pair of the rods (i.e., a dipole excitation, as depicted in FIG. 9B). The phases of the applied supplemental AC voltage are denoted, in FIG. 9B, as **AC0** and **ACπ**. The frequency of the AC wave should match the secular frequency or frequencies of target ions during the operation. Both amplitudes and frequencies of the waves can be ramped linearly or nonlinearly, e.g. exponentially, to achieve the desired ion manipulation. The ramped frequencies may include, for example, a range of frequencies includes a specific *m*/*z* ion secular frequency.

In accordance with other methods in accordance with the present teachings, transducer elements are "pre-aged" prior to being placed into service within a quadrupole mass spectrometer apparatus. Pre-aging of a transducer entails exposing, possibly selectively, the surface of the transducer to a flux of energetic particles prior to placing the transducer into service. The pre-aging process takes advantage of the general observation that the rate of lessening of the response of a transducer (either an MCP or a scintillator plate) to impact by an energetic particle beam is initially rapid when the transducer is new but, subsequently, decreases towards zero in asymptotic fashion. When incorporated into an imaging ion detector system, such as one of the systems schematically illustrated in FIG. 1C and FIG. 2, the initial rate of decrease of detector response is so great that instrumental calibrations remain valid for only a few days under normal operating conditions. However, factory aging test results (not shown) have indicated that calibrations may be spaced apart by periods of weeks after a pre-aging process. The described pre-aging processes may be employed either instead of or, alternatively, in addition to any of the beam migration or resonant excitation methods described above. Such pre-aging processes may be employed in conjunction with MCP or scintillator components of a known time and position imaging mass spectrometer detector system, such as one of the detector systems illustrated in FIG. 1C and FIG. 2 or other such systems as described in the aforementioned U.S. Patent No. 8,389,929. Alternatively, the described pre-aging processes may be employed in conjunction with components that are modified according to either one or both of the modifications illustrated in FIG. 6.

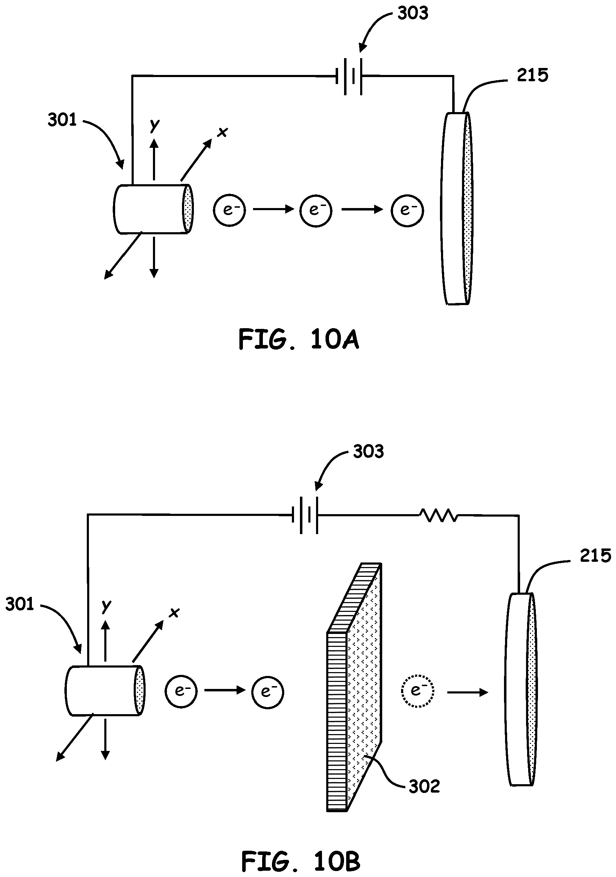

FIGS. 10A-10B schematically depict the pre-aging process for either an MCP or a scintillator plate **215.** In accordance with this process, the transducer element is exposed to a prescribed flux of photons or electrons (all denoted simply as **e**⁻) emitted by a LED or an electron emitter **301** where, in the case of electrons, the flux is motivated by an electrical potential difference provided by power supply electrically coupled to the transducer and to the emitter. This exposure of a newly manufactured transducer to photons/electrons causes the initial response diminution to be "burned in" to the transducer prior to its being placed into service. The exposure to the electron flux is made for a prescribed period of time and, optionally, according to a prescribed spatial pattern. Since the cross-sectional area of the electron beam will, in general be smaller than the area of the transducer face on which the electrons are caused to impinge, the electron beam may be progressively scanned or rastered over the surface of the transducer plate by either movement of the electron emitter (as schematically indicated by arrows) or by any other known method, such as programmatically controlled deflection of the beam by a magnetic field.

According to some embodiments, the scanning speed of the electron emitter **301** or the current emitted by the emitter (FIGS. 10A-10B) may be programmatically controlled such that the electron dosage density (number of electrons received per unit area of the transducer) is uniform across the surface of the transducer that is being pre-aged. According to some other embodiments, the scanning speed or emitted current may be programmatically varied as the electron beam is scanned over the transducer surface so that certain pre-determined sections of the surface receive greater or lesser degrees of aging. As an alternative to varying the scanning speed or emitted current, the electron flux may be partially attenuated, in a controlled fashion, by a mask element **302** disposed between the electron emitter **301** and the transducer **215,** as illustrated in FIG. 10B. The mask may be constructed so as to non-uniformly attenuate the photon or electron beam, so that the amount of pre-aging (electron dosage density) across the transducer is caused to be non-uniform in accordance with a pre-determined spatial pattern. When the transducer is in operation in an imaging mass spectrometer, the non-uniform pre-aging allows the transducer surface to be more highly sensitive (in a relative sense) to ion current at those locations of the image at which an ion signal is expected to either be less intense or to comprise highly diagnostic information.

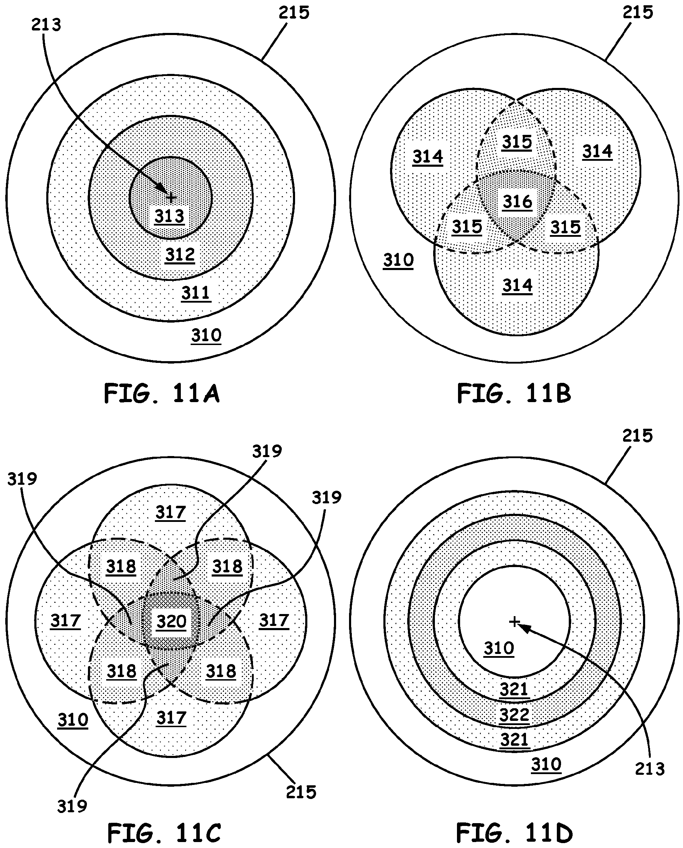

FIGS. 11A-11D illustrate four non-limiting examples of pre-aging patterns that might be applied to a transducer **215** that is to be employed in an imaging mass spectrometer. In each of FIGS. 11A-11D, unshaded region **310** represents a portion of the transducer that is not pre-aged and other shaded regions represent pre-aged portions, with the degree of pre-aging represented by the darkness of the shading (i.e., with more shading representing more intense pre-aging). The lines bounding the various regions are provided only to geometrically illustrate the various geometrical patterns and are not intended to necessarily imply the existence of sharp boundaries between regions, in terms of the degree of aging. In fact the degree of aging may be gradational within or between regions.

The hypothetical pre-aging patterns illustrated in FIGS. 11A-11C are suitable for use within a mass spectrometer system within which the transducers remain fixed relative to an ion beam emerging from a mass analyzer, with the centers of the transducers disposed along a quadrupole's central longitudinal axis **210** extended. For example, FIG. 11A depicts concentric pre-aging with the most intense pre-aging applied to a zone **313** about the center **213** of the transducer and surrounding by a plurality of concentric annular regions **312, 311** within which the degree of aging progressively decreases outward from the center. This pattern assures that the transducer center, which receives the greatest number of ions emerging from the mass analyzer (i.e., from the zone of ion focusing) is least susceptible to rapid aging while in operation, since this central region comprises the greatest degree of pre-aging. At the same time, regions of the transducer that are displaced from the central region retain greater sensitivity and therefore retain their ability to measure weaker but nonetheless diagnostic ion image patterns away from the zone of ion focusing.

FIG. 11B depicts a different pre-aging pattern that may be produced by directing or aiming an electron beam at or towards each of three separate but partially overlapping regions of a transducer, with each instance of aiming or directing the electron beam causing the electrons to impinge upon a respective circular region of the transducer, as depicted by the three circles that are discernible in FIG. 11B. In addition to the non-pre-aged zone **310,** this pattern comprises a single central zone **316** of maximum pre-aging, three separate and distinct zones **314** of minimum pre-aging and three other separate and distinct zones **315** of intermediate pre-aging. Similarly, FIG. 11C depicts a different pre-aging pattern that may be produced by directing or aiming an electron beam at or towards each of four separate but partially overlapping regions of a transducer, with each instance of aiming or directing the electron beam causing the electrons to impinge upon a respective circular region of the transducer. In addition to the non-pre-aged zone **310,** this pattern comprises a single central zone **320** of maximum pre-aging, four separate and distinct zones **317** of minimum pre-aging, four other separate and distinct zones **318** of a first level of intermediate pre-aging and four other separate and distinct zones **319** of a second level of intermediate pre-aging that is more intense than that in the zones **318.** In operation, a transducer having the pre-aging pattern shown in FIG. 11C is preferably aligned so that its lines of mirror symmetry are aligned, in a predetermined fashion, with planes of mirror symmetry (or approximate mirror symmetry) of a quadrupole with which it is associated. This alignment will generally be effected when the transducer or transducers comprising the pre-aging pattern are installed or re-installed.

FIG. 11D depicts a different pre-aging pattern in which the different zones are geometrically arranged as a set of concentric annular rings, for which the common center is the center **213** of a face of the transducer **215.** According to this pattern, the maximum pre-aging occurs within a one of the annular rings **322** and a lesser degree of applied pre-aging occurs within rings **321** both inward and outward of the ring **322** of maximum pre-aging. Also, two non-pre-aged zones are present, a first of which occurs about the center **213** and a second of which occurs about at the periphery of the transducer **215.** The number of and widths of the annular rings need not be limited as shown in FIG. 11D. This pre-aging pattern is suitable for use in conjunction with an apparatus in which the zone of ion focusing is caused to migrate in a circular pattern around the center **213** of the transducer (e.g., FIG. 7 and FIG. 8B), either by physical manipulation of the position of the transducer itself or by electrostatic offset of a pseudopotential well within an associated quadrupole.

The discussion included in this application is intended to serve as a basic description. Indeed, various modifications of the invention, in addition to those shown and described herein are possible without departing from the extent of the invention as determined by the appended claims.

## Claims

1. An ion detection system for a quadrupole mass analyzer comprising:
a stack (102, 103) of microchannel plates (13a, 13b, 13c) comprising a front face (32) and a rear face (34), the stack disposed so as to receive, at the front face (32), a flux of ions (I) from an exit aperture (108) of a quadrupole (101) and to emit, at the rear face (34), a flux of electrons (e⁻) in response to the received flux of ions (I);
a scintillator (107) having a front (36) and a rear (38) surface and disposed so as to receive the flux of electrons (e⁻) at the front surface and to emit, at the rear surface, a flux of photons (p) in response to the received flux of electrons (e⁻);
a photo-imager configured to receive the flux of photons (p);
a power supply (31); and
first, second and third (104) electrodes coupled to the power supply and disposed at the front face (32), rear face (34) and front surface (36), respectively, the system **characterised in that**:
the scintillator (107) comprises a single crystal plate of a phosphorescent material and **in that** at least one of the scintillator (107) and the stack (102, 103) of microchannel plates (13a, 13b, 13c) comprises an encoded pre-aging pattern therein, the encoded pre-aging pattern being disposed in a pre-determined alignment with respect to a set of rod electrodes (X1, X2, Y1, Y2) of the quadrupole (101) such that the encoded pre-aging pattern corresponds to an expected pattern of ion flux from the quadrupole (101).

2. An ion detection system as recited in claim 1, wherein a thickness of the single crystal plate is less than or equal to 1 millimeter.

3. An ion detection system as recited in claim 1, wherein the phosphorescent material is cerium-doped gadolinium aluminum gallium garnet (Ce:GAGG).

4. An ion detection system as recited in claim 1, wherein the phosphorescent material is cerium-doped yttrium-aluminum garnet (Ce:YAG).

5. An ion detection system as recited in claim 1, further comprising:
an electronic controller (33),
wherein the power supply (31) is configured to apply separate, independent direct-current (DC) voltages to at least one pair of diametrically opposed rod electrodes (X1, X2, Y1, Y2) of the quadrupole (101) in response to control signals received from the controller (33).

6. An ion detection system as recited in claim 1, further comprising:
an electronic controller (33),
wherein the power supply (31) is configured to apply, in response to a control signal receive from the controller (33), opposite phases of a resonant excitation alternating current (AC) voltage waveform across one pair of rods (X1, X2, Y1, Y2) of the quadrupole (101), said AC voltage waveform comprising a frequency matched to a frequency of oscillation, within the quadrupole, of a selected ion species.

7. An ion detection system as recited in claim 1, further comprising:
an electronic controller (33),
wherein the power supply (31) is configured to apply, in response to a control signal receive from the controller (33), a resonant excitation alternating current (AC) voltage waveform comprising a first phase to both of a pair of x-rods (X1, X2) of the quadrupole (101),
wherein the power supply (31) is configured to apply, in response to the control signal, the resonant excitation alternating current (AC) voltage waveform comprising a second phase, opposite to the first phase, to both of a pair of y-rods (Y1, Y2) of the quadrupole (101),
wherein said AC voltage waveform comprises a frequency matched to a frequency of oscillation, within the quadrupole, of a selected ion species.

8. An ion detection system as recited in claim 1, further comprising:
an electronic controller (33); and
an actuator coupled to at least one of the scintillator (107) and the stack (102, 103) of microchannel plates (13a, 13b, 13c),
wherein the actuator is configured to re-position the at least one of the scintillator (107) and the stack (102, 103) of microchannel plates (13a, 13b, 13c) in in response to control signals received from the controller (33).

9. An ion detection system as recited in claim 1, wherein the stack (103) of microchannel plates comprises at least three microchannel plates (13a, 13b, 13c).

10. A method of performing mass spectrometric analyses, comprising:
(a) passing a stream of ions through a quadrupole mass analyzer (101) comprising a set of rod electrodes (X1, X2, Y1, Y2);
(b) intercepting a flux of ions (I) emitted from an exit aperture (108) of the quadrupole mass analyzer (101) at a front face (32) of a stack (102, 103) of multichannel plates (13a, 13b, 13c) and emitting a flux of electrons (e⁻) in response to the intercepted flux of ions (I) at a rear face (34) of the stack (102, 103) of multichannel plates (13a, 13b, 13c);
(c) intercepting the flux of electrons (e⁻) at a front surface (36) of a scintillator (107) comprising a single crystal plate of a phosphorescent material and emitting a flux of photons (p) in response to the intercepted flux of electrons (e⁻) at a rear surface (38) of the scintillator (107); and
(d) receiving the flux of photons (p) at a photo-imager,
the flux of ions (I) is intercepted at a front face (32) of a microchannel plate that has a pre-aging pattern encoded therein, said pre-aging pattern being disposed in a pre-determined alignment with respect to the set of rod electrodes (X1, X2, Y1, Y2) such that the encoded pre-aging pattern corresponds to an expected pattern of ion flux from the quadrupole mass analyzer (101).

11. A method of performing mass spectrometric analyses as recited in claim 10, wherein the intercepting of the flux of electrons (e⁻) at the front surface (36) of the scintillator (107) comprises intercepting the flux of electrons (e⁻) at the front surface of a single crystal plate of cerium-doped gadolinium aluminum gallium garnet (Ce:GAGG).

12. A method of performing mass spectrometric analyses as recited in claim 10, wherein the intercepting of the flux of electrons (e⁻) at the front surface (36) of the scintillator (107) comprises intercepting the flux of electrons (e⁻) at the front surface of a single crystal plate of cerium-doped yttrium-aluminum garnet (Ce:YAG).

13. A method of performing mass spectrometric analyses as recited in claim 10, further comprising:
repositioning at least one of the scintillator (107) and the stack (102, 103) of microchannel plates (13a, 13b, 13c) during the execution of one or more of the steps (a) through (d).

14. A method of performing mass spectrometric analyses as recited in claim 10, further comprising:
laterally repositioning the stream of ions (I) within the quadrupole mass analyzer during the execution of one or more of the steps (a) through (d).

## Patentansprüche

1. lonennachweissystem für ein Quadrupolmassenspektrometer, umfassend:
einen Stapel (102, 103) von Mikrokanalplatten (13a, 13b, 13c), der eine vordere Fläche (32) und eine hintere Fläche (34) umfasst, wobei der Stapel so angeordnet ist, dass er an der vorderen Fläche (32) einen Fluss von Ionen (I) von einer Austrittsöffnung (108) eines Quadrupols (101) empfängt und an der hinteren Fläche (34) einen Fluss von Elektronen (e⁻) als Antwort auf den empfangenen Fluss von Ionen (I) ausstrahlt;
einen Szintillator (107) mit einer vorderen (36) und einer hinteren (38) Oberfläche, der so angeordnet ist, dass er den Fluss von Elektronen (e⁻) an der vorderen Oberfläche empfängt und an der hinteren Oberfläche einen Fluss von Photonen (p) als Antwort auf den empfangenen Fluss von Elektronen (e⁻) ausstrahlt;
einen Photoimager, der konfiguriert ist, um den Fluss von Photonen (p) zu empfangen;
eine Energieversorgung (31); und
eine erste, eine zweite und eine dritte (104) Elektrode, die mit der Energieversorgung gekoppelt und an der vorderen Fläche (32), der hinteren Fläche (34) bzw. der vorderen Oberfläche (36) angeordnet sind,
das System, **dadurch gekennzeichnet, dass:**
der Szintillator (107) eine Einkristallplatte aus einem phosphoreszierenden Material umfasst und dass mindestens einer von dem Szintillator (107) und dem Stapel (102, 103) von Mikrokanalplatten (13a, 13b, 13c) ein codiertes Voralterungsmuster in sich umfasst, wobei das codierte Voralterungsmuster in einer vorbestimmten Ausrichtung in Bezug auf einen Satz von Stabelektroden (X1, X2, Y1, Y2) des Quadrupols (101) angeordnet ist, sodass das codierte Voralterungsmuster einem erwarteten Muster des lonenflusses von dem Quadrupol (101) entspricht.

2. lonennachweissystem nach Anspruch 1, wobei die Dicke der Einkristallplatte weniger als oder gleich 1 Millimeter beträgt.

3. lonennachweissystem nach Anspruch 1, wobei das phosphoreszierende Material Cer-dotiertes Gadolinium-Aluminium-Gallium-Granat (Ce:GAGG) ist.

4. lonennachweissystem nach Anspruch 1, wobei das phosphoreszierende Material Cer-dotiertes Yttrium-Aluminium-Granat (Ce:YAG) ist.

5. lonennachweissystem nach Anspruch 1, ferner umfassend:
eine elektronische Steuerung (33),
wobei die Energieversorgung (31) so konfiguriert ist, dass sie als Antwort auf von der Steuerung (33) empfangene Steuersignale separate, unabhängige Gleichspannungen an mindestens ein Paar diametral gegenüberliegender Stabelektroden (X1, X2, Y1, Y2) des Quadrupols (101) anlegt.

6. lonennachweissystem nach Anspruch 1, ferner umfassend:
eine elektronische Steuerung (33),
wobei die Energieversorgung (31) so konfiguriert ist, dass sie als Antwort auf ein von der Steuerung (33) empfangenes Steuersignal entgegengesetzte Phasen einer Resonanzanregungs-Wechselspannungs-Wellenform an ein Paar von Stäben (X1, X2, Y1, Y2) des Quadrupols (101) anlegt, wobei die Wechselspannungs-Wellenform eine Frequenz umfasst, die an eine Schwingungsfrequenz einer ausgewählten lonenspezies innerhalb des Quadrupols angepasst ist.

7. lonennachweissystem nach Anspruch 1, ferner umfassend:
eine elektronische Steuerung (33),
wobei die Energieversorgung (31) so konfiguriert ist, dass sie als Antwort auf ein von der Steuerung (33) empfangenes Steuersignal eine erste Phase umfassende Resonanzanregungs-Wechselspannungs-Wellenform (AC) an beide eines Paares von X-Stäben (X1, X2) des Quadrupols (101) anlegt,
wobei die Energieversorgung (31) so konfiguriert ist, dass sie als Antwort auf das Steuersignal die Resonanzanregungs-Wechselspannungs-Wellenform (AC), die eine zweite Phase umfasst, die der ersten Phase entgegengesetzt ist, an beide Y-Stäbe (Y1, Y2) des Quadrupols (101) anlegt,
wobei die AC-Spannungswellenform eine Frequenz umfasst, die an die Oszillationsfrequenz einer ausgewählten lonenspezies innerhalb des Quadrupols angepasst ist.

8. lonennachweissystem nach Anspruch 1, ferner umfassend:
eine elektronische Steuerung (33); und
einen Aktuator, der mit mindestens einem von dem Szintillator (107) und dem Stapel (102, 103) von Mikrokanalplatten (13a, 13b, 13c) gekoppelt ist,
wobei der Aktuator so konfiguriert ist, dass er als Antwort auf von der Steuerung (33) empfangene Steuersignale den Szintillator (107) und/oder den Stapel (102, 103) von Mikrokanalplatten (13a, 13b, 13c) neu positioniert.

9. lonennachweissystem nach Anspruch 1, wobei der Stapel (103) von Mikrokanalplatten mindestens drei Mikrokanalplatten (13a, 13b, 13c) umfasst.

10. Verfahren zur Durchführung von Massenspektrometeranalysen, umfassend:
(a) Hindurchgehenlassen eines lonenstroms durch ein Quadrupolmassenspektrometer (101), das einen Satz von Stabelektroden (X1, X2, Y1, Y2) umfasst;
(b) Auffangen eines Flusses von Ionen (I), der von einer Austrittsöffnung (108) des Quadrupolmassenspektrometers (101) ausgestrahlt wird, an einer vorderen Fläche (32) eines Stapels (102, 103) von Mehrkanalplatten (13a, 13b, 13c) und Ausstrahlen eines Flusses von Elektronen (e⁻) als Antwort auf den aufgefangenen Fluss von Ionen (I) an einer hinteren Fläche (34) des Stapels (102, 103) von Mehrkanalplatten (13a, 13b, 13c);
(c) Auffangen des Flusses von Elektronen (e⁻) an einer vorderen Oberfläche (36) eines Szintillators (107), der eine Einkristallplatte aus einem phosphoreszierenden Material umfasst, und Ausstrahlen eines Flusses von Photonen (p) als Antwort auf den abgefangenen Fluss von Elektronen (e⁻) an einer hinteren Oberfläche (38) des Szintillators (107); und
(d) Empfangen des Flusses von Photonen (p) an einem Photoimager,
der Fluss von Ionen (I) an einer vorderen Fläche (32) einer Mikrokanalplatte aufgefangen wird, die ein darin codiertes Voralterungsmuster
aufweist, wobei das Voralterungsmuster in einer vorbestimmten Ausrichtung in Bezug auf den Satz von Stabelektroden (X1, X2, Y1, Y2) angeordnet ist, sodass das codierte Voralterungsmuster einem erwarteten Muster des lonenflusses von dem Quadrupolmassenspektrometer (101) entspricht.

11. Verfahren zur Durchführung von Massenspektrometeranalysen nach Anspruch 10, wobei das Auffangen des Flusses von Elektronen (e⁻) an der vorderen Oberfläche (36) des Szintillators (107) das Auffangen des Flusses von Elektronen (e⁻) an der vorderen Oberfläche einer Einkristallplatte aus Cerdotiertem Gadolinium-Aluminium-Gallium-Granat (Ce:GAGG) umfasst.

12. Verfahren zur Durchführung von Massenspektrometeranalysen nach Anspruch 10, wobei das Auffangen des Flusses von Elektronen (e⁻) an der vorderen Oberfläche (36) des Szintillators (107) das Auffangen des Flusses von Elektronen (e⁻) an der vorderen Oberfläche einer Einkristallplatte aus Cerdotiertem Yttrium-Aluminium-Granat (Ce:YAG) umfasst.

13. Verfahren zur Durchführung von Massenspektrometeranalysen nach Anspruch 10, ferner umfassend:
Neupositionieren des Szintillators (107) und/oder des Stapels (102, 103) von Mikrokanalplatten (13a, 13b, 13c) während der Ausführung von einem oder mehreren der Schritte (a) bis (d).

14. Verfahren zur Durchführung von Massenspektrometeranalysen nach Anspruch 10, ferner umfassend:
seitliches Neupositionieren des lonenstroms (I) innerhalb des Quadrupolmassenspektrometers während der Ausführung eines oder mehrerer der Schritte (a) bis (d).

## Revendications

1. Système de détection d'ions pour un analyseur de masse quadripolaire comprenant :
une pile (102, 103) de plaques de microcanaux (13a, 13b, 13c) comprenant une face avant (32) et une face arrière (34), la pile étant disposée de manière à recevoir, au niveau de la face avant (32), un flux d'ions (I) provenant d'une ouverture de sortie (108) d'un quadripôle (101) et à émettre, au niveau de la face arrière (34), un flux d'électrons (e⁻) en réponse au flux d'ions (I) reçu ;
un scintillateur (107) ayant une surface avant (36) et une surface arrière (38) et disposé de manière à recevoir le flux d'électrons (e⁻) au niveau de la surface avant et à émettre, au niveau de la surface arrière, un flux de photons (p) en réponse au flux d'électrons (e⁻) reçu ;
un photo-imageur conçu pour recevoir le flux de photons (p) ;
une alimentation électrique (31) ; et
des première, deuxième et troisième électrodes (104) couplées à l'alimentation électrique et disposées au niveau de la face avant (32), de la face arrière (34) et de la surface avant (36), respectivement,
le procédé étant **caractérisé en ce que** :
le scintillateur (107) comprend une plaque monocristalline d'un matériau phosphorescent et **en ce qu'**au moins l'un parmi le scintillateur (107) et la pile (102, 103) de plaques de microcanaux (13a, 13b, 13c) comprend un motif de pré-vieillissement codé dans celle-ci, le motif de pré-vieillissement codé étant disposé dans un alignement prédéterminé par rapport à un ensemble d'électrodes à tige (X1, X2, Y1, Y2) du quadripôle (101) de telle sorte que le motif de pré-vieillissement codé correspond à un motif attendu de flux d'ions provenant du quadripôle (101).

2. Système de détection d'ions selon la revendication 1, dans lequel une épaisseur de la plaque monocristalline est inférieure ou égale à 1 millimètre.

3. Système de détection d'ions selon la revendication 1, dans lequel le matériau phosphorescent est un grenat en aluminium de gallium de gadolinium dopé au cérium (GAGG:Ce).

4. Système de détection d'ions selon la revendication 1, dans lequel le matériau phosphorescent est un grenat d'yttrium-aluminium dopé au cérium (YAG:Ce).

5. Système de détection d'ions selon la revendication 1, comprenant en outre :
un dispositif de commande électronique (33),
l'alimentation électrique (31) étant configurée pour appliquer des tensions de courant continu (CC) indépendantes et distinctes à au moins une paire d'électrodes de tige diamétralement opposées (X1, X2, Y1, Y2) du quadripôle (101) en réponse à des signaux de commande reçus à partir du dispositif de commande (33).

6. Système de détection d'ions selon la revendication 1, comprenant en outre :
un dispositif de commande électronique (33),
l'alimentation électrique (31) étant configurée pour appliquer, en réponse à un signal de commande reçu du dispositif de commande (33), des phases opposées d'une forme d'onde de tension de courant alternatif (CA) d'excitation résonante à travers une paire de tiges (X1, X2, Y1, Y2) du quadripôle (101), ladite forme d'onde de tension CA comprenant une fréquence adaptée à une fréquence d'oscillation, à l'intérieur du quadripôle, d'une espèce d'ion sélectionnée.

7. Système de détection d'ions selon la revendication 1, comprenant en outre :
un dispositif de commande électronique (33),
l'alimentation électrique (31) étant configurée pour appliquer, en réponse à un signal de commande reçu à partir du dispositif de commande (33), une forme d'onde de tension de courant alternatif (CA) d'excitation résonnante comprenant une première phase à chacune des deux tiges x (X1, X2) du quadripôle (101),
l'alimentation électrique (31) étant configurée pour appliquer, en réponse au signal de commande, la forme d'onde de tension de courant alternatif (CA) d'excitation résonante comprenant une seconde phase, opposée à la première phase, à chacune des deux tiges y (Y1, Y2) du quadripôle (101),
ladite forme d'onde de tension CA comprenant une fréquence adaptée à une fréquence d'oscillation, à l'intérieur du quadripôle, d'une espèce d'ion sélectionnée.

8. Système de détection d'ions selon la revendication 1, comprenant en outre :
un dispositif de commande électronique (33) ; et
un actionneur couplé à au moins l'un parmi le scintillateur (107) et la pile (102, 103) de plaques de microcanaux (13a, 13b, 13c),
l'actionneur étant configuré pour repositionner l'au moins un parmi le scintillateur (107) et la pile (102, 103) de plaques de microcanaux (13a, 13b, 13c) en réponse à des signaux de commande reçus à partir du dispositif de commande (33).

9. Système de détection d'ions selon la revendication 1, dans lequel la pile (103) de plaques de microcanaux comprend au moins trois plaques de microcanaux (13a, 13b, 13c).

10. Procédé pour effectuer des analyses de spectrométrie de masse, comprenant :
(a) le passage d'un flux d'ions à travers un analyseur de masse quadripolaire (101) comprenant un ensemble d'électrodes de tige (X1, X2, Y1, Y2) ;
(b) l'interception d'un flux d'ions (I) émis à partir d'une ouverture de sortie (108) de l'analyseur de masse quadripolaire (101) au niveau d'une face avant (32) d'une pile (102, 103) de plaques multicanaux (13a, 13b, 13c) et émettant un flux d'électrons (e⁻) en réponse au flux intercepté d'ions (I) au niveau d'une face arrière (34) de la pile (102, 103) de plaques multicanaux (13a, 13b, 13c) ;
(c) l'interception du flux d'électrons (e⁻) au niveau d'une surface avant (36) d'un scintillateur (107) comprenant une plaque monocristalline d'un matériau phosphorescent et émettant un flux de photons (p) en réponse au flux intercepté d'électrons (e⁻) au niveau d'une surface arrière (38) du scintillateur (107) ; et
(d) la réception du flux de photons (p) au niveau d'un photo-imageur,
le flux d'ions (I) est intercepté au niveau d'une face avant (32) d'une plaque de microcanaux qui a un motif de pré-vieillissement
codé dans celle-ci, ledit motif de pré-vieillissement étant disposé dans un alignement prédéterminé par rapport à l'ensemble d'électrodes de tige (X1, X2, Y1, Y2) de telle sorte que le motif de pré-vieillissement codé correspond à un motif attendu de flux d'ions provenant de l'analyseur de masse quadripolaire (101).

11. Procédé pour effectuer des analyses de spectrométrie de masse selon la revendication 10, dans lequel l'interception du flux d'électrons (e⁻) au niveau de la surface avant (36) du scintillateur (107) comprend l'interception du flux d'électrons (e⁻) au niveau de la surface avant d'une plaque monocristalline de grenat en aluminium de gallium de gadolinium dopé au cérium (GAGG:Ce).

12. Procédé pour effectuer des analyses de spectrométrie de masse selon la revendication 10, dans lequel l'interception du flux d'électrons (e⁻) au niveau de la surface avant (36) du scintillateur (107) comprend l'interception du flux d'électrons (e⁻) au niveau de la surface avant d'une plaque monocristalline de grenat d'yttrium-aluminium dopé au cérium (YAG:Ce).

13. Procédé pour effectuer des analyses de spectrométrie de masse selon la revendication 10, comprenant en outre :
le repositionnement d'au moins l'un parmi le scintillateur (107) et la pile (102, 103) de plaques de microcanaux (13a, 13b, 13c) pendant l'exécution d'une ou plusieurs des étapes (a) à (d).

14. Procédé pour effectuer des analyses de spectrométrie de masse selon la revendication 10, comprenant en outre :
le repositionnement latéral du flux d'ions (I) à l'intérieur de l'analyseur de masse quadripolaire pendant l'exécution d'une ou plusieurs des étapes (a) à (d).
